# EUROPEAN PATENT SPECIFICATION

(11) **EP 0 516 758 B1**
(45) Date of publication and mention of the grant of the patent: **22.10.1997**
(21) Application number: 91906478.2
(22) Date of filing: 26.02.1991
(51) Int. Cl.: F25J 5/00, B01D 9/04, B01D 3/00, B01D 8/00, B01D 9/00, C02F 1/22, F26B 7/00

(54) **ABSORPTION VAPOR PRESSURE ENHANCEMENT PROCESS AND ITS APPLICATIONS IN HIGH LEVEL REFRIGERATION AND SEPARATION PROCESSES**
VERFAHREN ZUM VERGRÖSSERN DES DAMPFDRUCKS DURCH ABSORPTION UND DESSEN ANWENDUNGEN BEI HOCHSTUFIGEN KÜHL- UND TRENNVERFAHREN
PROCEDE D'AUGMENTATION DE PRESSION DE VAPEUR PAR ABSORPTION ET SES APPLICATIONS DANS DES PROCEDES DE REFRIGERATION ET DE SEPARATION A NIVEAU ELEVE

(30) Priority: 27.02.1990 US 486081; 01.05.1990 US 518077
(43) Date of publication of application: 09.12.1992
(73) Proprietor: Cheng, Chen-Yen, Albuquerque New Mexico, 87111 (US)
(72) Inventor: Cheng, Chen-Yen, Albuquerque New Mexico, 87111 (US)
(74) Representative: Thomson, Paul Anthony
(86) International application number: US9101397
(87) International publication number: WO9113301

(56) References cited:
- EP-A- 0 036 209
- EP-A- 0 086 768
- EP-A- 0 148 756
- FR-A- 2 528 956
- US-A- 4 378 984
- US-A- 4 451 273
- US-A- 4 489 571
- US-A- 4 505 728
- US-A- 4 578 093
- US-A- 4 810 274

## Description

### BACKGROUND OF THE INVENTION

### Field of the Invention (Technical Field):

An Absorption Vapor Pressure Enhancement Process of the present invention is used to take in a mass of solvent vapor under a first pressure P₁, having an equilibrium condensing temperature T₁, absorb the vapor into an absorbing solution at an elevated temperature higher than T₁, utilize the heat of absorption to generate a substantially equivalent mass of second vapor under a second pressure P₂ that is suhstantially higher than the first pressure. The pressure enhancement is accomplished by dilution of the absorbing sclution. Therefore, a system of the present invention is equivalent to a compressor that compresses a vapor from the first pressure to the second pressure. The process is particularly useful in pressure enhancement of low pressure vapor, say lower than 10 torr, for which conventional compressors either do not work well or are expensive. The process is therefore useful in processes wherein low pressure vapors are involved; such as in high level refrigeration processes and separation processes including freeze drying processes and multiple phase transformation processes.

The processes and apparatuses of the present invention can be used in absorption refrigeration systems, each using a volatile solvent such as water and a non-volatile solute such as lithium bromide, lithium chloride, calcium chloride, magnesium chloride, ethylene glycol and propylene glycol. A system of the present invention can be used for more than one step of vapor absorption and therefore can attain a high degree of temperature lifting.

The processes and apparatuses of the invention can be used for conducting solid-liquid-vapor (S/L/V) multiple phase transformation processes such as vacuum freezing processes, primary refrigerant eutectic freezing processes and distillative freezing processes. An S/L/V multiple phase transformation refers to simultaneous vaporization and solidification operations by which a mass of liquid is simultaneously partially vaporized and partially solidified to thereby form a first vapor and a mass of solvent solid. the processes of the present invention are to be used in chemical purification, desalination, pollution abatement, and concentration of industrial solutions.

The processes and apparatuses can also be used in the following systems:
(1) Systems for conducting two phase fractional crystallization processes such as in dewaxing of lubrication oil and column crystallization.
(2) Chemical processing systems such as in recovery of condensable components out of gas streams, e.g. recovery of condensable hydrocarbon from natural gas.
(3) Systems for conducting freezing drying.
(4) Systems for making ice and ice cream.
(5) Systems for cool storage (thermal storage).
(6) Systems for product cooling such as in meat packing.
(7) Systems for cooling liquids such as fruit juices, beer and wine.

### Background Art:

Since an absorption vapor pressure enhancing unit is to be used in handling low pressure vapors, a review of conventional low pressure handling equipment is presented; since a system of the present invention is used to attain a high level refrigeration involving vapor absorption steps, a review of conventional absorption refrigeration is presented; since systems of the present invention are to be used in various separation processes which generate low pressure vapors, a review of relevant separation processes is presented.

### Equipment Used for Handling Low Pressure Vapors:

Conventional equipment used for handling low pressure vapors are described in books on (a) Vacuum Technology, and (b) Unit operations in chemical engineering. Examples of these books are:
(1) James L. Ryans, et al "Process Vacuum System Design and Operation," McGraw Hill, 1986 and
(2) Perry's "Chemical Engineers' Handbook" Sixth Edition, McGraw Hill.

Conventional equipment used to handle low pressure vapors are (A) steam jet ejectors, (B) liquid ring vacuum pumps, (C) rotary piston pump, (D) rotary vane pump, and (E) rotary lobe blower. These type of equipment are not suitable for the types of applications the absorption vapor pressure enhancers are intended to be used. This is because this conventional equipment can only handle relatively small volume rates of flow and are very expensive.

### Absorption Refrigeration:

A commercial absorption refrigeration unit has (a) an evaporator section, (b) an absorber section, (c) a generator section, and (d) a condenser section.

An absorption refrigeration unit uses water as the refrigerant under a deep vacuum. The unit operates on the simple principle that under low absolute pressure (Vacuum), water takes up heat and vaporizes at a low temperature. For example: at 0.835 kPa (0.25 inches of mercury) absolute pressure, water boils at 5°C (40 degrees Fahrenheit). To obtain the energy required, it takes heat from and chills another liquid (usually water). The chilled liquid can than be used for cooling purposes. These operations are conducted in the evaporator section of the unit.

To make the cooling process continuous, the vaporized refrigerant water is absorbed by an absorbing solution, usually lithium bromide water solution. The removal of refrigerant vapor by absorption keeps pressure in the evaporator section low enough for vaporization to continue. Heat of absorption is released and is removed through heat transfer coils by a stream of cooling water. The absorbing solution becomes a diluted absorbing solution. These operations are conducted in the absorber section of the unit.

The diluted absorbing solution is pumped to the generator section where water is vaporized from it at pressure considerable higher than that in the evaporator section described. A stream of high pressure vapor and concentrated absorbing solution are formed. These operations are conducted in the generator section of the unit. The concentrated absorbing solution is heat exchanged with the diluted absorbing solution and is then returned to the absorber section.

The high pressure water vapor is condensed by heat exchange with a stream of cooling water to from a condensate. The condensate is returned to the evaporator section.

The chilled water produced by a conventional single effect absorption refrigeration is generally limited to about 5 degrees Centigrade (40 degrees Fahrenheit). The temperature limit attainable by a single effect operation is set by the need of using cooling water near or above ambient temperature and by a limitation of formation of lithium bromide hydrate crystals and anhydrous lithium bromide crystals.

A method and apparatus for recycling thermal energy is disclosed in US-A-4,527,621. In such document there is disclosed a process and apparatus for the reutilisation of low-level thermal energy. According to such disclosure, devices are utilised forming an evaporator-mixer, advantageously connected to devices forming an evaporator-separator in order to supply from a low-level heat source, for example at 25°C, higher-level heat, for example at 80°C, by making use of the phenomena of evaporation and mixing of two fluids in vapor-pressure equilibrium at different temperatures. Such document also relates, in particular, to the utilisation of the noble thermal energy consumed in a high-temperature boiler. To this end, the heat given off in the boiler is first used to assure in evaporation-separators, the formation or reconstitution of concentrated solutions from diluted solutions, and these concentrated solutions are utilised according to the needs of demand to extract by means of evaporator-mixes heat coming from a low-level source.

### Separation Processes Involving Low Pressure Vapors:

The methods and apparatuses of the present invention are to be used in upgrading heat in separation processes in which low pressure vapors are generated. These processes include (a) freeze drying processes, and (b) various types of solid-liquid-vapor (S/L/V) multiple phase transformation processes. An S/L/V transformation refers to simultaneous vaporization and solidification operations of a mass of liquid to thereby form a first vapor and form a mass of solid which may be a mass of solvent crystals or a mixed mass of solvent and solute crystals. The S/L/V multiple phase transformation processes include (a) Vacuum Freezing Processes, (b) Primary Refrigerant Eutectic Freezing Process, and (c) Distillative Freezing Processes. The methods and apparatuses of the present invention can be adapted to improve these processes by improving handling the low pressure vapors generated, upgrading heat, and melting masses of crystals produced.

### Vacuum Freezing Processes:

Several vacuum freezing processes have been introduced by workers in the desalination field. These processes are (1) Vacuum-Freezing Vapor-Compression (VFVC) Process, developed by Colt Industries, (2) Vacuum-Freezing Vapor-Absorption (VFVA) Process, developed by Carrier Corporation, (3) Vacuum-Freezing Ejector-Absorption (VFEA) Process, developed by Colt Industries, (4) Vacuum-Freezing Solid Condensation (VFSC) Process developed in the Catholic University of America, (5) Absorption Freezing Vapor compression (AFVC) Process, introduced by Concentration Specialists, Inc., (6) Vacuum Freezing High Pressure Ice Melting (VFPIM), introduced by Chen-Yen Cheng and Sing-Wang Cheng, and (7) Vacuum Freezing Multiple Phase Transformation Process, also introduced by Chen-Yen Cheng and Sing-Wang Cheng.

Referring to the processing of aqueous solution by any vacuum freezing process, the aqueous solution is introduced into a chamber which is maintained at a pressure that is somewhat lower than the vapor pressure of the solution at the freezing temperature of the solution to thereby simultaneously flash vaporize water and form ice crystals. This operation is referred to as the S/L/V transformation in a vacuum freezing process. As the result of this operation, a low pressure water vapor, referred to as a first vapor, and an ice-mother liquor slurry, referred to as a first condensed mass, are formed. In the case of sea water desalination, this pressure is around 3.5 Torr. The low pressure water vapor formed has to be removed and transformed into a condensed state; the ice crystals have to be separated from the mother liquor and the resulting purified ice has to be melted to yield fresh water. Furthermore, the heat released in transforming the vapor into a condensed state has to be utilized in supplying the heat needed in melting the ice. The processes described utilize different ways of handling the low pressure vapors generated and different ways of accomplishing the heat reuse.

The Vacuum Freezing Vapor Compression Process is described in the Office of Saline Water, Research and Development Report No. 295. In the process, the low pressure water vapor is compressed to a pressure higher than the triple point pressure of water (4.58 Toor) and is then brought in direct contact with purified ice to thereby simultaneously condense the water vapor and melt the ice. The main disadvantages of this process are that the special compressor designed to compress the low pressure water vapor cannot be operated reliably, and the compressor efficiency is low.

The Vacuum Freezing Vapor Absorption Process was developed by Carrier Corporation up to 1964, but has been discontinued. The process is described in the Office of Saline Water, Research and Development Report No. 113. In the process, the low pressure water vapor is absorbed by a concentrated lithium bromide solution. The diluted solution is reconcentrated by evaporation and the water vapor so formed is condensed to become fresh water. Heat of absorption is removed by a recycling water stream through a heat transfer surface; the recycling water stream is then used to melt the ice crystals.

The Vacuum Freezing Ejector Absorption Process was also developed by Colt Industries, and is described in Office of Saline Water, Research and Development Report No. 744. In the process, the low pressure water vapor obtained in the freezing step is compressed by a combination of steam ejector and absorber loop. A concentrated sodium hydroxide solution is used to absorb a part of the low pressure vapor; the diluted sodium hydroxide solution is boiled to form water vapor at 300 Torr, and is used to compress the remaining low pressure water vapor.

The Vacuum-Freezing Solid-Condensation Process was developed by Professor H.M. Currand and C.P. Howard of the Catholic University of America and is described in Office of Saline Water, Research and Development Report No. 511. In the process, Freon-12 is used to remove the latent heat released in transforming the low pressure vapor into ice and supply the latent heat needed in the melting of both the ice formed in the freezing step and ice transformed from the low pressure water vapor.

The Absorption Freezing Vapor Compression (AFVC) Process was introduced by Concentration Specialists, Inc., Andover, Mass., and a 25,000 gdp pilot plant has been built in OWRT (Office of Water Research and Technology) Wrightsville Beach Test Station. The absorption freezing vapor compression (AFVC) Process is a vacuum freezing process in which the freezing is accomplished in a stirred tank crystallizer due to the evaporation of water vapor which in turn is absorbed in an adjacent chamber by a concentrated solution of sodium chloride (NaCl). The NaCl solution, diluted by the water vapor, is pumped to a generator where it is concentrated to its original strength by a vapor compression cycle using a closed circuit refrigerant as the working fluid. The vapor compression cycle operated between the absorber and generator, taking the heat that is associated with absorption and pumping it up to a level such that it can be used to evaporate the absorbate in the generator. The vapor liberated in the generator is used to melt the ice in direct contact. It is noted that the first vapor is absorbed in the absorbing solution near the freezing temperature, and the heat of absorption is removed by vaporizing a refrigerant.

In the improved Vacuum-Freezing High Pressure Ice Melting Process of U.S. Patent No. 4,236,382, an aqueous solution is flash vaporized under a reduced pressure to simultaneously form a low pressure water vapor and ice crystals. The ice formed is first purified in a counter-washer and then melted inside of heat conductive conduits under a high pressure (e.g. 600 atm.), and the low pressure water vapor is desublimed to form desublimate (ice) on the outside of the conduits. The latent heat of desublimation released is utilized in supplying the heat needed in the ice-melting operation. The desublimate is removed intermittently by an insitu dissolution operation utilizing an aqueous solution such as the feed solution or the concentrate; about an equivalent amount of ice is formed inside of the conduits by an exchange freezing operation. The ice so formed is also melted by the high pressure ice melting operation described.

The vacuum Freezing Multiple Phase Transformation Process has also been introduced by Chen-Yen Cheng and Sing-Wang Cheng and is described in U.S. Patent No. 4,505,728. In the process, the first vapor is liquefied by desublimation followed by desublimate melting operations.

### The Primary Refrigerant Eutectic Freezing Processes:

The Primary Refrigerant Eutectic Freezing (PREUF) Process has been introduced by Chen-Yen Cheng, Wu-Ching Cheng and Wu-Cheh Cheng and is described in U.S. Patent 4,654,064. The process is used to separate mixtures containing at least one volatile component and two or more crystal-forming components. Heat is removed from a eutectic mixture at near its eutectic temperature by inducing vaporization of a portion of the eutectic mixture at its eutectic temperature. The vapor is liquefied by a two-step process: (a) desublimination, and (b) desublimate-melting. Co-crystallization of different components in the same zone of the freezer, or selective crystallization in different sub-zone of the freezer are possible.

Basic distillative freezing process has bee introduced by Chen-Yen Cheng and Sing-Wang Cheng and is described in their U.S. Patent No. 4,438,558.

In such process a feed containing at least two close-boiling volatile components - a major and crystallizing component (R-component) and at least one minor and non-crystallizing component (A-component) is flash vaporized under a sufficiently reduced pressure in a distillative freezer (1) to simultaneously crystallize the B-component. The process is continued to completely eliminate the liquid phase and bring the mixture into the two-phase solid-vapor region to produce a solid phase mass S₁ which is no longer contaminated by an adhering liquid phase and is a purified B-solid. The purified solid S₁ is melted in the melter (2) to become a purified B-liquid I₂. The first vapor V₁ contains all the impurities and is brought to a first condensed mass K₃ either by a simple condensation or a mixed condensation-solidification by lowering its temperature a few degrees without any pressurization in the condenser (3). When the condensed mass K₃ is a mixture of solid and liquid, it is sent to a melter (4) to melt the solid portion of the condensed mass and the melt is discharged as a concentrated impure liquid L₄.

### Wet and Dry Distillative Freezing Process:

Wet and Dry Distillative Freezing (DF) Process has been introduced by Chen-Yen Cheng and Sing-Wang Cheng and is described in U.S. Patent No. 4,578,093. A wet and dry distillative freezing process comprises: (a) a first step of transforming a liquid feed mixture into a first solid-liquid mixture, denoted as K₁ mixture, and an impure liquid L₂, and (b) a second step of subjecting K₂ mixture, derived from K₁ mixture, to a dry distillative freezing operation to thereby form a mass of refined solid phase, denoted as S₃, and a low pressure vapor V₁. The low pressure vapor is liquefied by first condensing it into a solid-liquid mixture and then melting the solid so formed.

### Freeze Drying Processes:

Freeze drying is used extensively in processing pharmaceuticals, biologicals used in medical research, and foods and concentrated beverages, vegetables, beef, seafood, coffee, and orange juice. The product of freeze drying is a stable solid that can be stored indefinitely at room temperature and that can be reconstituted by simple addition of water. The process is inherently expensive. Therefore, it is limited to applications for which significant improvements in product quality can be demonstrated, and to applications involving expensive products.

The objective of freeze drying is the removal of water from a solid. The process involves three distinct steps: freezing, sublimation, and desorption. Product materials are frequently introduced into the dryer as a frozen solid. If freezing is the initial step of the operation, it is normally accomplished by placing the product in trays on refrigerated shelves inside the vacuum chamber. Sublimation, the second step in the process, is subject to both mass-transfer and heat-transfer limitations, and both chamber pressure and shelf temperature are important process variables. Lower pressures increase drying rates at the expense of increased costs for refrigeration and the vacuum pumping system. Economics will normally dictate pressures in the range 20 to 100 microns for the production of pharmaceuticals and biologicals used in medical research. Freeze dryers used for food preservation normally operate in the range 250 to 750 microns. Production of freeze-dried coffee and freeze-dried orange juice requires pressures in the range 100 to 200 microns.

Freeze dryers operate in the range 20 to 750 microns. This requirement dictates the design of the vacuum pumping system. Four- and five-stage steam jets have been used for freeze-drying applications, particularly those that require high capacity at low operating pressures, but rotary-piston oil-sealed pumps and rotary-blower-rotary-piston oil-sealed pump systems dominate process applications. The vacuum pump evacuates the vacuum chamber.

A multiple effect vapor enhancing unit of the present invention can be used to handle the very low pressure water vapor generated in a freeze drying process.

### SUMMARY OF THE INVENTION (DISCLOSURE OF THE INVENTION)

Referring to processing of an aqueous mixture, in a process of the present invention, a first water vapor at a first pressure is absorbed into a absorbing solution containing water and a non-volatile solute such as lithium bromide, lithium chloride, calcium chloride, magnesium chloride, ethylene glycol or propylene glycol at substantially the same pressure but at a temperature that is higher than the pure water saturation temperature corresponding to the absorption pressure. The heat released in the absorption operation is transmitted to a mass of pure water to generate a second water vapor at a second pressure that is substantially higher than that of the first vapor. the absorbing solution is diluted in this absorption operation. the absorption of the first vapor, the generation of the second vapor and the dilution of the absorbing solution are collectively referred to as a vapor pressure enhancement operation activated by dilution of the absorbing solution. Two types of vapor pressure enhancement units are introduced: Type A units and Type B units. The methods and apparatuses of the present invention may also be used in enhancing vapor pressure of a non-aqueous solvent.

In a Type A system, the vapor pressure enhancement is accomplished across a vertical heat transfer wall provided with two falling liquid films. The film on one side (Zone 1) is a liquid film of an absorbing solution; the film on the other side (Zone 2) is a liquid film of pure water. When a first vapor at a first pressure is brought in contact with the absorbing solution in Zone 1, the first vapor is absorbed at substantially the same pressure but at a temperature higher than the pure water saturation temperature corresponding to the absorption pressure. The heat released in this absorption operation is transmitted through the vertical heat transfer wall to the falling pure water film to vaporize water and generate second vapor at a second pressure that is higher than that of the first vapor. Therefore, the pure water saturation temperature of the second vapor is higher than that of the first vapor. The effects of this operation are that the first vapor is absorbed into the absorbing solution, the second vapor at a pressure higher than that of the first vapor is generated and the absorbing solution is diluted. A Type A unit may be referred to as a double liquid film unit.

A Type B system also has a first processing zone (Zone 1) and a second processing zone (Zone 2). A heat exchange coil is placed in zone 1 and another heat exchange coil is place in Zone 2. A first vapor is absorbed into an absorbing solution in zone 1 and a stream of second vapor is generated from water in Zone 2. The two heat exchange coils are connected to form a loop, and a circulating pump is used to circulate a heat transfer medium through the two coils. Heat of absorption is removed by the circulating medium which released heat to vaporize water. A Type B unit may be referred to as a looped coil unit.

In a multiple stage absorption refrigeration system of the present invention, there are more than one vapor pressure enhancement units. A first vapor at a first pressure is pressure enhanced in a first enhancement unit by a first absorbing solution to become a second vapor at a second pressure; the second vapor is pressure enhanced in a second enhancement unit to become a third vapor at a third pressure by a second absorbing solution, and so on. A high degree temperature lifting is made possible. Therefore, it is possible to reach a low temperature that has not been attainable by a conventional single stage absorption refrigeration. It is also possible to avoid formation of solute crystals from the absorbing solution. It is therefore possible to provide refrigeration needed in such low temperature operations as vacuum freezing operations, distillative freezing operations, ice formation operations, column crystallization, eutectic freezing, and low temperature condensation operations. It is noted that low grade heat may be used to activate a multi-stage absorption refrigeration operations of the present invention.

The absorption vapor pressure enhancement process of the present invention may be used to handle the low pressure first vapor generated in a solid-liquid-vapor multiple phase transformation process to generate a second vapor, which is then used to melt purified solid. The resulting process is referred to as a Multiple Phase Transformation Absorption Melting (MPTAM)
Process.

A Multiple Phase Transformation Absorption Melting (MPTAM) Process comprises a multiple phase transformation step in which a feed solution is subjected to simultaneous vaporization and solvent crystallization operation to thereby form a first vapor, V₁₂, and a solid-liquid mixture, K₁₈ (denoted as a first condensed mass), and is characterized in coupling a temperature elevating first vapor absorption operation with a solvent solid melting operation. The absorbing solution used contains the solvent and a properly selected solute in a properly selected concentration range so that while the absorption pressure is near or slightly lower than that of the freezing operation, the absorbing temperature is somewhat higher than the melting temperature of the solvent solid.

In one way of conducting the MPTAM Process, the heat released in the absorption step is first used to generate a mass of second vapor and the second vapor is brought in contact with the solvent solid to simultaneously condense the vapor and melt the solid. An integrated system to conduct a MPTAM Process is introduced. In this system, the absorption and second vapor generation operations are conducted around two liquid films formed on the two sides of a heat conduction wall so that the heat of absorption on one side is transmitted through the wall and utilized in supplying the latent heat of vaporization of generating the second vapor.

In another way of conducting the MPTAM Process, the first vapor may also be absorbed into an absorbing solution on the outer surface of a heat exchange conduit that contin a slurry of solvent solid. The heat released in the absorption step is transmitted through the conduit wall to melt the solvent solid.

The absorbing solution is diluted in the absorption operation and the diluted solution is concentrated back to the original concentration. Low grade heat sources, such as low pressure steam in power generation plant, particularly in co-generation plant, or various other sources, may be used to accomplish this operation.

In a freeze drying process, a low pressure water vapor in a range of 20 to 750 microns is generated. A multiple stage absorption vapor pressure enhancing process may be used to transform the low pressure vapor into a liquid state, upgrade the heat and ultimately reject the heat to a convenient heat sink near ambient temperature.

### BRIEF DESCRIPTION OF THE DRAWINGS

The present invention introduces a new way of enhancing vapor pressure by coupling the pressure enhancing operation with an operation of diluting an absorbing solution. There are Type A enhancement units and Type B enhancement units. An operation conducted in a Type A enhancement unit is referred to as a Type A enhancement operation; an operation conducted in a Type B enhancement unit is referred to as a Type B enhancement operation.

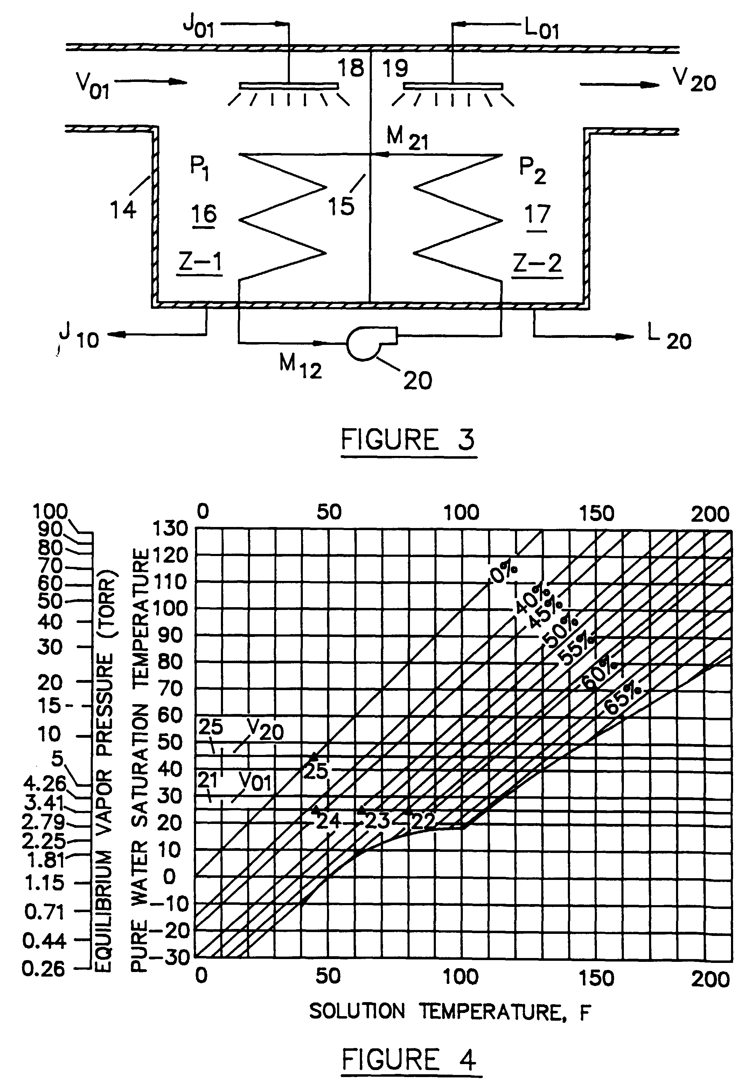

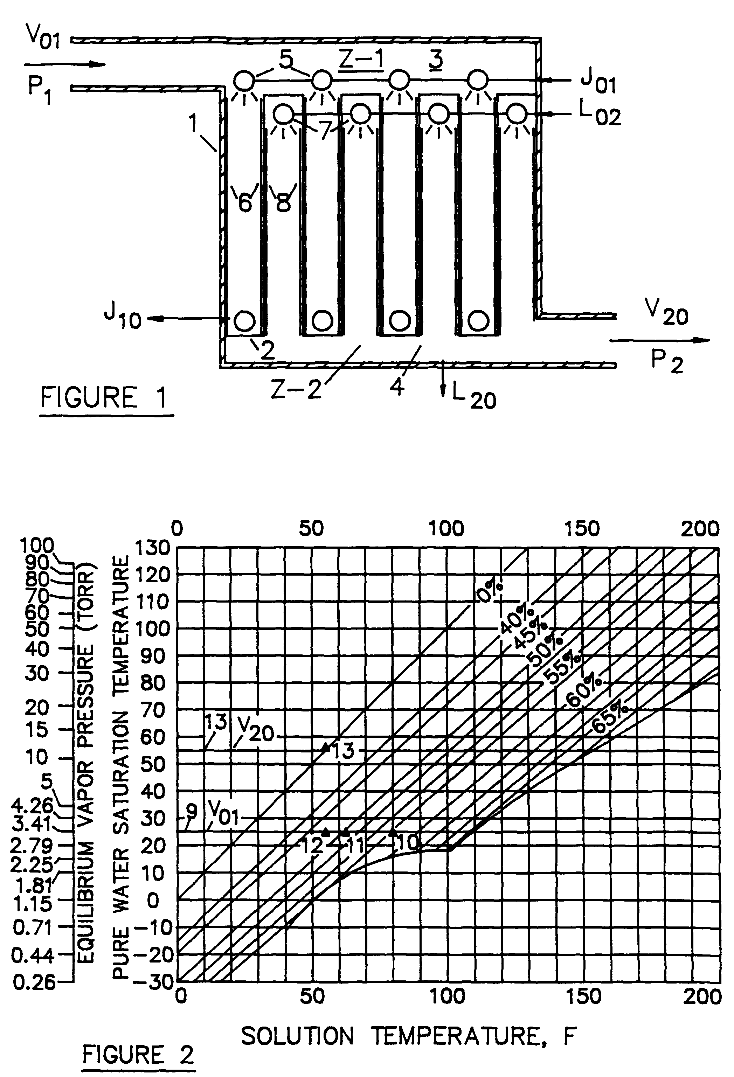

Figure 1 illustrates a Type A unit for conducting the vapor pressure enhancement operation. It shows that a falling film of an absorbing solution and a falling film of a mass of solvent liquid are formed on the two surfaces of a vertical heat conductive wall. A first vapor is absorbed into the film of absorbing solution; a mass of second vapor is generated from the film of solvent liquid. Figure 2 illustrates a equilibrium phase diagram of lithium bromide-water system. The operating conditions of the vapor pressure enhancement operation described are illustrated on Figure 2.

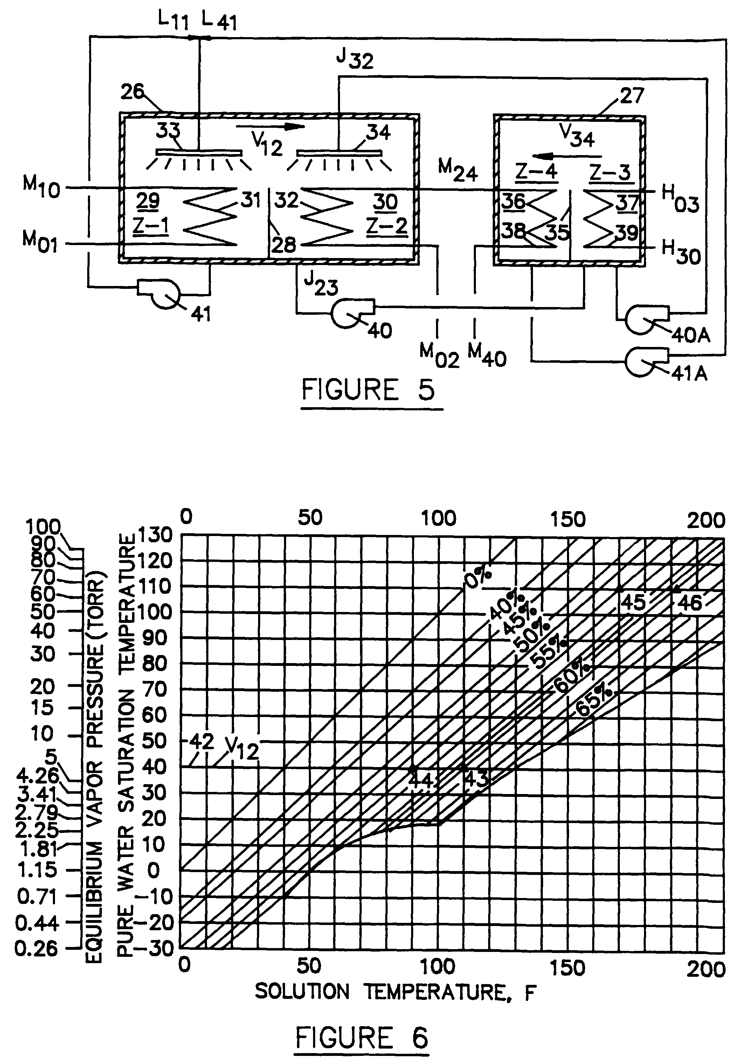

Figure 3 illustrates a Type B system for conducting the vapor pressure enhancement operation. The system comprises a first processing zone, Z-1, in which a first vapor is absorbed into a first absorbing solution to become a second absorbing solution and a second processing zone, Z-2, in which a mass of solvent liquid is vaporized to become a second vapor. A circulating heat transfer medium is circulated between the two processing zones to remove the heat released in the absorption operation and supply the heat needed in the vaporization operation. The operating conditions of the Type B operation are illustrated in Figure 4.

Figure 5 illustrates a conventional absorption refrigeration system using an absorbing solution comprising water and a non-volatile solute, usually lithium bromide. The operating conditions of the system are illustrated in Figure 6. These figures are used to illustrate the performance limitations of a conventional system.

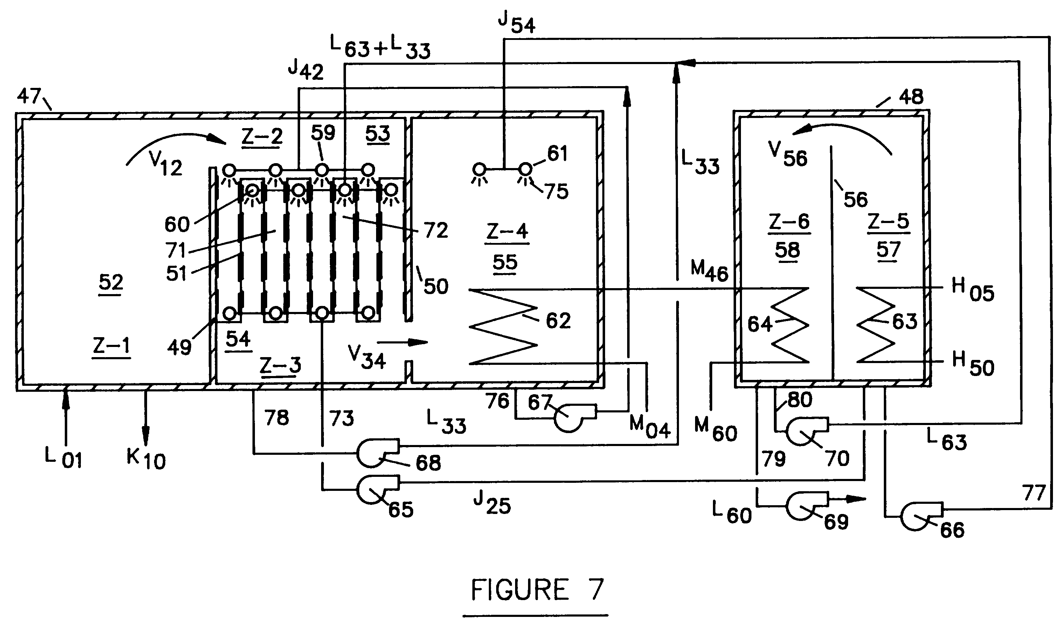

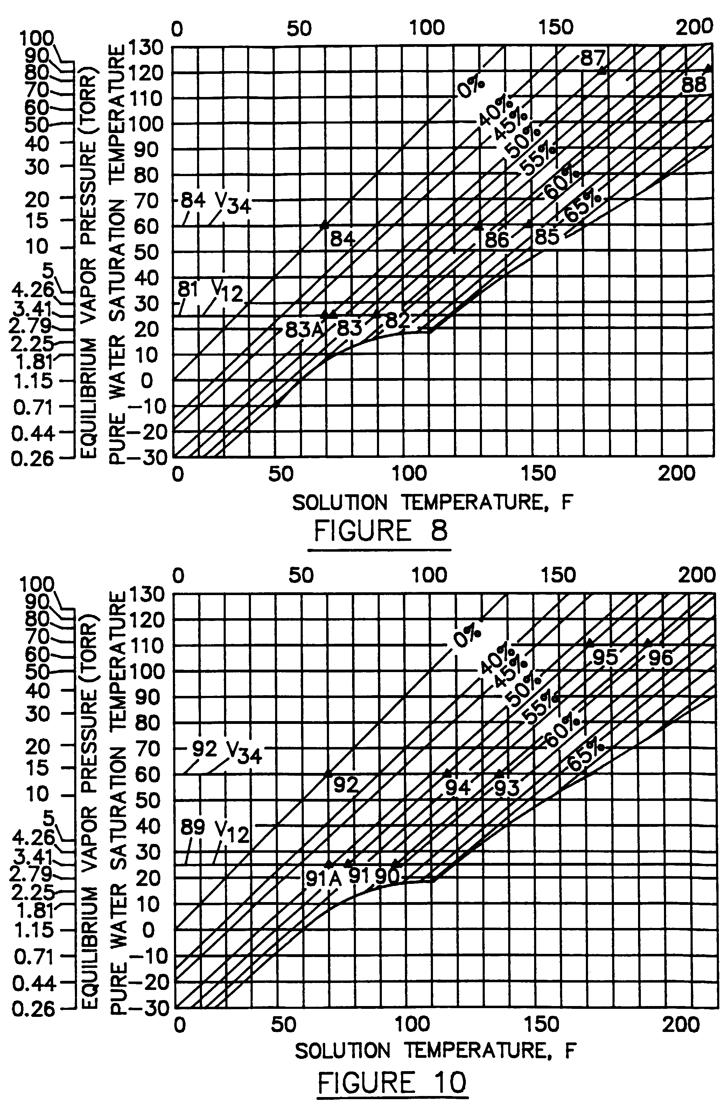

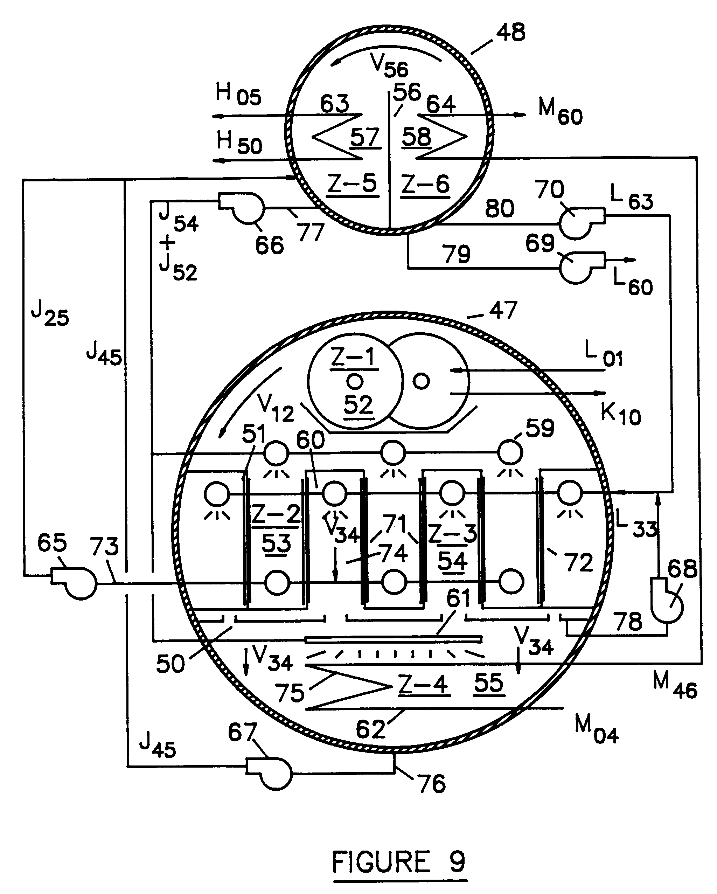

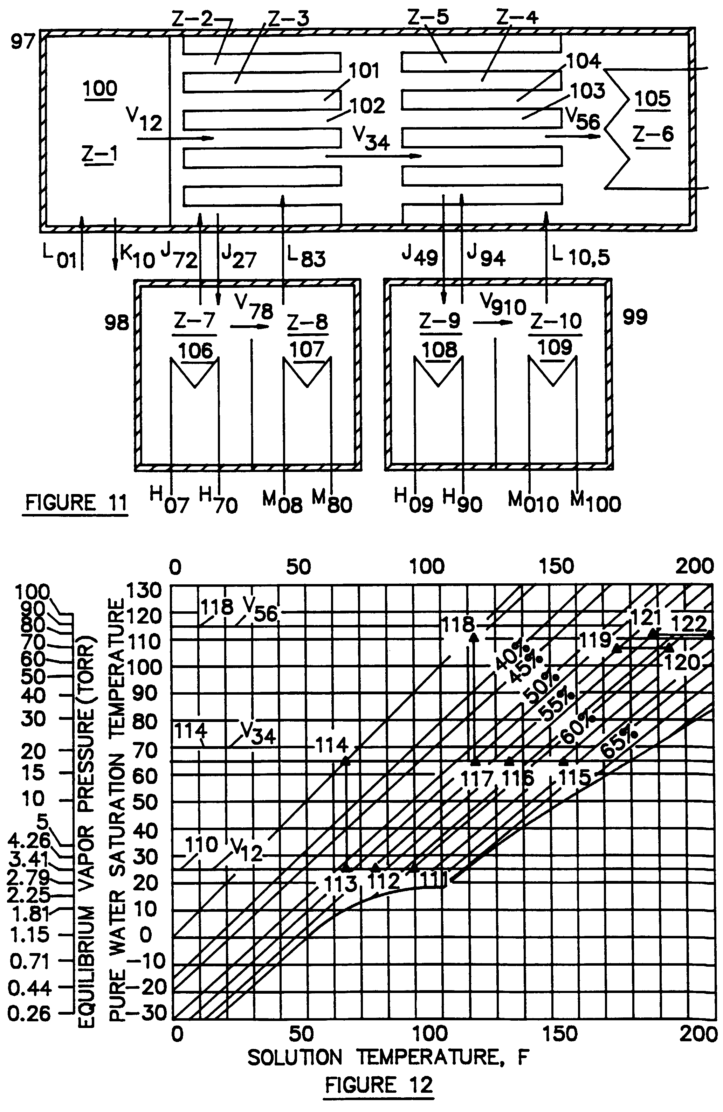

Figures 7 and 9 illustrate integrated systems utilizing Type A vapor pressure enhancement operations. In each of these systems, a first vapor formed from any process is subjected to a Type A vapor pressure enhancement operation to become a second vapor and the second vapor is absorbed into another absorbing solution with the heat released in the second absorption operation removed by a stream of cooling medium at a readily available temperature, such as cooling water at ambient temperature. The diluted absorbing solutions are regenerated, heat exchanged and recycled. The two absorbing solutions used may be used in series, in parallel, or be used independently. The system of Figure 7 uses a series approach; the system of Figure 9 uses a parallel arrangement. Figures 8 and 10 illustrate phase diagrams of lithium bromide-water systems. The operating conditions of the systems of Figures 7 and 9 are respectively illustrates in Figures 8 and 10.

Figure 11 illustrates yet another system in which Type A vapor pressure enhancement operations are used twice and the diluted absorbing solutions are regenerated independently. In the system, a first vapor is subjected to a first Type A operation to produce a second vapor and the second vapor is subjected to a second Type A operation to reproduce a third vapor. The third vapor is at such an elevated pressure that it is condensed by a readily available cooling medium. The operating conditions of this system are illustrated by Figure 12.

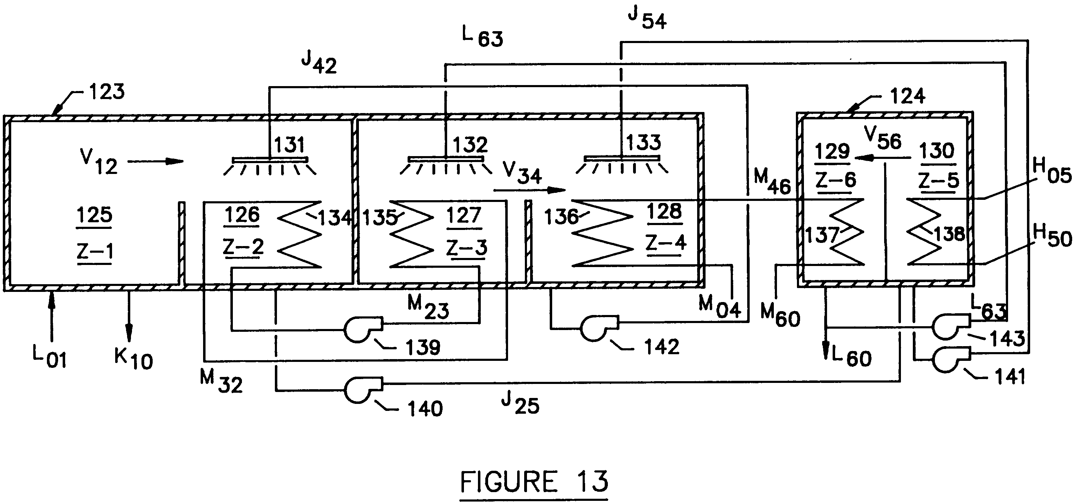

Figure 13 illustrates integrated systems in which first vapors are subjected to Type B vapor pressure enhancement operations using first absorbing solutions to produce second vapors and the second vapors at elevated pressures are absorbed into second absorbing solutions at elevated temperatures so that heat released in the absorption operations are removed by cooling mediums at temperatures that are readily available. The diluted absorbing solutions are regenerated and recycled.

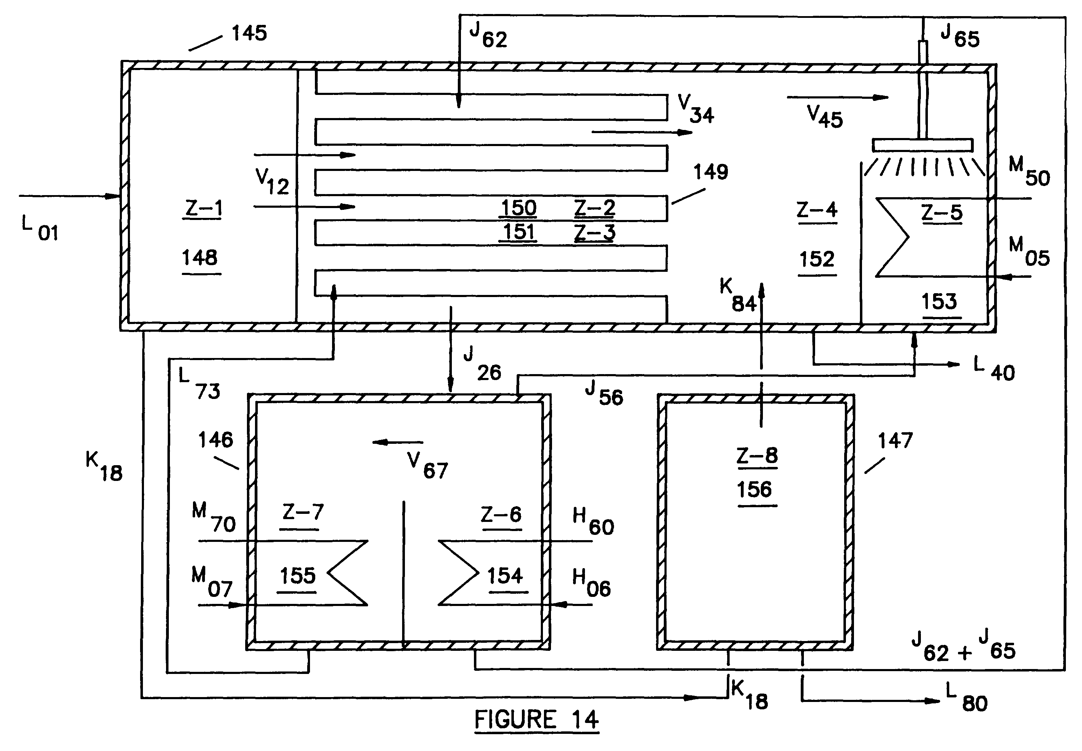

Figure 14 illustrates a Type A multiple phase transformation process (MPTAM Process) with coupled vapor absorption and crystal melting operations. In this system, the first vapor formed in a solid-liquid-vapor multiple phase transformation operation is subjected to a vapor pressure enhancement operation using a first absorbing solution to thereby produce a second vapor whose pressure is higher than the triple point pressure of the solvent crystals. The second vapor is brought in contact with a mass of solvent crystals to thereby simultaneously condense the second vapor and melt the solvent crystals. The system requires an auxiliary refrigeration system to maintain the system under a properly balanced state. The needed auxiliary refrigeration is accomplished by absorbing a fraction of the second vapor into a second absorbing solution and removing the heat of absorption by a cooling medium at a readily available temperature. The first absorbing solution and the second absorbing solution may be the same solution and be regenerated together.

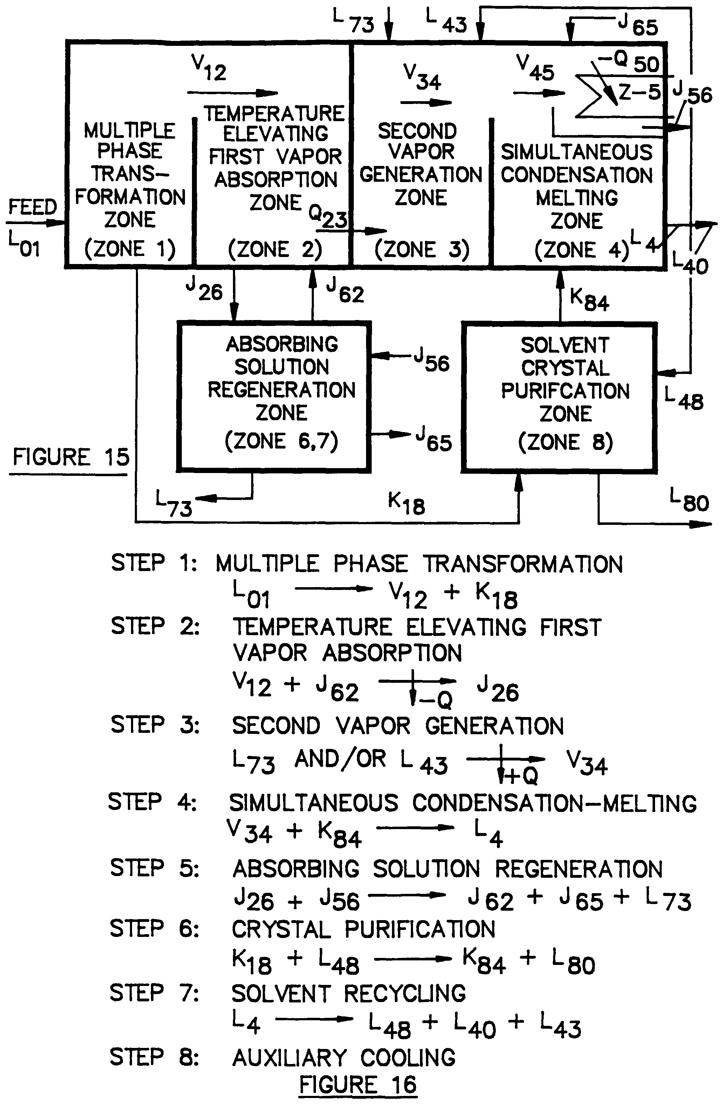

Figure 15 illustrates a block diagram of the MPTAM System illustrated in Figure 14. It illustrates the functions of the processing zones and also illustrates the material flows among the zones. Figure 16 illustrates the processing steps of the MPTAM system. In this system, the heat of absorbing first vapor is utilized to generate second vapor and the second vapor is used to melt the solvent solid.

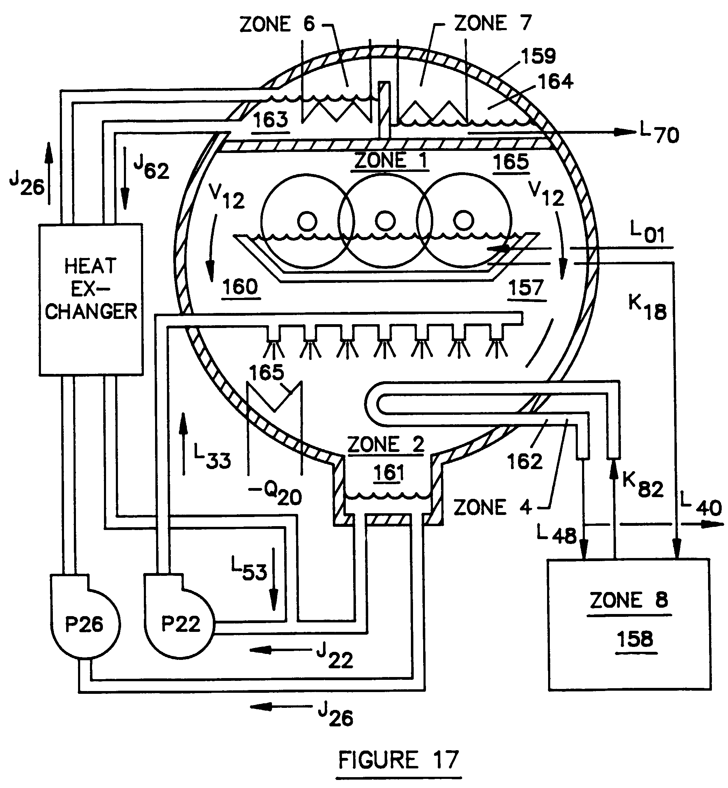

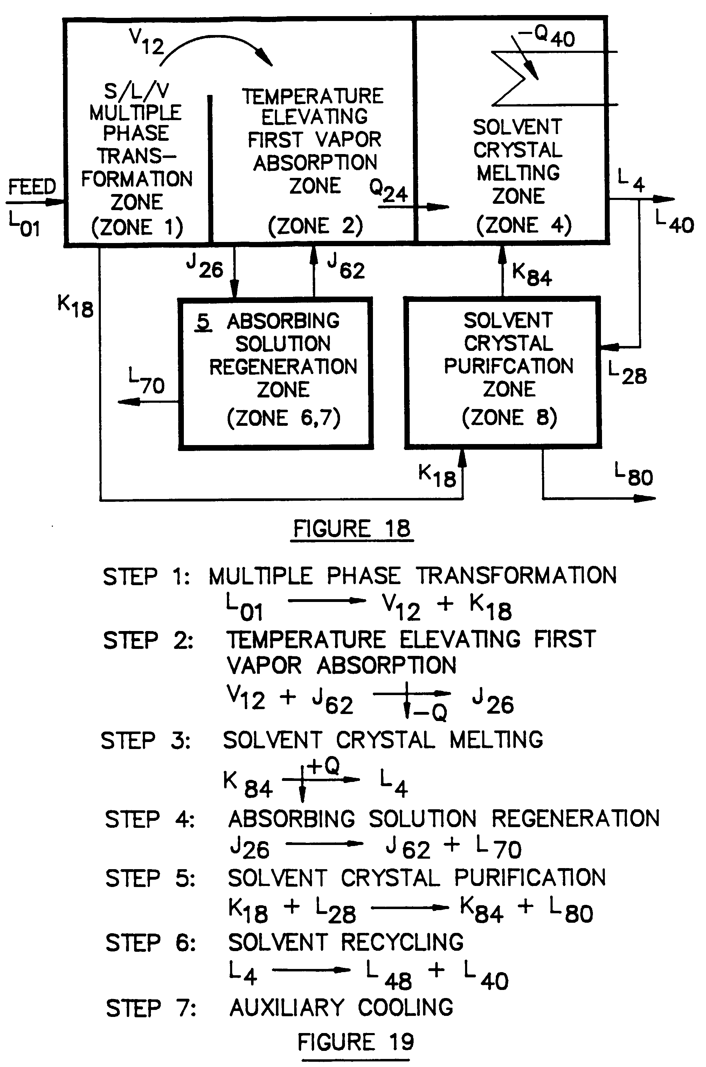

Figure 17 illustrates a Type B Multiple Phase Transformation Process (MTPFM Process) with coupled vapor absorption and crystal melting operations. Figure 18 illustrates a block diagram of a Type B MPTAM System showing the functions of various processing zones; Figure 19 illustrates the processing steps of the process. In this system the first vapor is absorbed into an absorbing solution on the outer surface of a heat exchange conduit that contains a slurry of solvent solid. The heat released in the absorbing step is transmitted through the condiut wall to melt the solvent solid.

### DESCRIPTION OF THE PREFERRED EMBODIMENTS (BEST MODES FOR CARRYING OUT THE INVENTION)

A new method of absorbing a first and low pressure vapor into an absorbing solution and generating an equivalent amount of second vapor at an elevated pressure is introduced. These operations are accomplished by diluting an absorbing solution. Two types of units for accomplishing the vapor pressure enhancement are introduced: viz. Type A units and Type B units. A Type A unit may be referred to as a double falling liquid film unit; a Type B unit may be referred to as a looped coil unit. An operation conducted in a Type A unit is referred to as a Type A enhancement operation; an operation conducted in a Type B unit is referred to as a Type B enhancement operation.

Figure 1 illustrates a Type A unit and is used to illustrate a Type A enhancement operation. The unit comprises a vacuum enclosure 1, a partitioner 2 having a multitude of vertical heat transfer walls separating the unit into a first processing zone 3 (Zone 1) and a second processing zone 4 (zone 2). The unit has a first set of sprayers 5 for spraying an absorbing solution on one side of the vertical walls to form vertical liquid films 6 of the absorbing solution in Zone 1; the unit has a second set of sprayers 7 for spraying a mass of water on the other side of the vertical walls to form vertical water films 8 in Zone 2. The absorbing solution J₀₁ enters the sprayer 5, absorbs the first vapor at about the pressure P₁ of the first vapor but at a temperature substantially higher than the pure water saturation temperature at the first vapor pressure. The absorbing solution is diluted and the diluted solution is discharged as the J₁₀ stream. The water stream L₀₂ is applied to the vertical walls. The heat of absorption is transmitted through the vertical walls and to the falling water film to generate a second vapor V₂₀ at a second pressure P₂. The excess water L₂₀ is recycled to the unit with a make up water to form the L₀₂ stream. The pressure P₂ of the second vapor is substantially higher than P₁ of the first vapor. Therefore, the operation is referred to as a Type A vapor pressure enhancement operation.

Figure 2 shows the relation between the vapor pressure in Torrs of an aqueous lithium bromide solution and the solution concentration and the solution temperature. Pure water saturation temperatures corresponding to various pressures are also shown along a separate y-axis. The figure also shows the saturation line of anhydrous lithium bromide and the saturation line of hydrated lithium bromide.

The operating conditions of the Type A vapor pressure enhancement operation are also illustrated in Figure 2. It shows that the first vapor enters the unit under a first pressure P₁ illustrated by the horizontal line 9. The concentration of the initial absorbing solution J₀₁ and the initial absorbing temperature are represented by point 10. As the absorption operation progresses, the concentrate of the absorbing solution and the absorbing temperature decrease. The concentration of the final solution J₁₀ and the final absorbing temperature are represented by point 11. There is a temperature differential between the two liquid films needed for heat transfer. Therefore, the temperature of the falling water film is illustrated by point 12. The condition of the second vapor is illustrated by point 13. It is seen that the pressure P₂ of second vapor at point 13 is substantially higher than the pressure of the first vapor at point 9. This pressure increase if referred to as the pressure enhancement of the vapor streams. It is seen that this pressure enhancement is accomplished by coupling the pressure enhancement with dilution of the absorbing solution.

Figure 3 illustrates a Type B pressure enhancement unit. It comprises a vacuum enclosure 14, a vertical partitioner 15 separating the unit into a first processing zone 16 (Zone 1) and a second processing zone 17 (Zone 2), a first spraying device 18 for spraying an absorbing solution J₀₁, a second spraying device 19 for spraying water L₀₂. There are heat exchange coils in the two zones connected together with a circulating pump 20. A heat transfer medium is circulated in the loop by the circulation pump. The medium M₂₁ enters the first zone and absorbs the heat of absorption and leaves the zone as M₁₂. The medium enters the second zone and releases heat to the water in Zone 2 to generate second vapor V₂₀ at a second pressure P₂. The medium is cooled to become the M₂₁ stream. A part of the water introduced in the second zone vaporizes and becomes the second vapor; the rest is discharged as the L₂₀ stream. Make up water is added to the L₂₀ stream to form the L₀₂ stream.

Figure 4 is the phase diagram of lithium bromide-water mixtures. The operating conditions of the Type B pressure enhancement operation described above are illustrated in the figure. The first vapor V₀₁ enters at a first pressure illustrated by the horizontal line 21. The initial absorption condition is illustrated by point 22. The absorbing solution is diluted and the absorbing temperature is lowered. So, the final absorbing condition is illustrated by point 23. Since the temperature of the heat transfer medium is raised in Zone 1 and lowered in Zone 2, the temperature 24 at which the second vapor is generated is substantially lower than that of the final absorbing condition 23. It is noted that this temperature differential between points 23 and 24 in the Type B system is greater than that between points 11 and 12 in the Type A system. Therefore, the pressure 25 of the second vapor generated is lower than 13 in the Type A unit when both are operated under equivalent inlet conditions. It is noted that the component parts needed in assembling a Type B unit are commercially available from suppliers of conventional absorption refrigeration systems.

Figure 5 illustrates a conventional single stage absorption refrigeration system and Figure 6 illustrates the operating conditions. The system comprises a first vessel 26 and a second vessel 27. The first vessel contains a separating wall 28 which separates the vessel into a first processing zone 29 (Zone 1) and a second processing zone 30 (Zone 2). There are heat exchange coils 31 and 32 in the two zones and there are two spraying devices 33 and 34 in the two zones. There is a partitioner 35 that separates the second vessel into a third processing zone 37 and a fourth processing zone 36. There are heat exchange coils 39 and 38 in the two zones. The two coils 32 and 38 in the second zone and the fourth zone are connected to form a loop.

Zone 1 is an evaporator section in which water L₁₁ and L₄₁ are sprayed and flash vaporized to form a first vapor stream V₁₂ and cool the coil 31. In a typical application, a heat transfer medium M₁₀ enters at a temperature of say 15.5 degrees C (60 degrees F) and is cooled in the coil to become a chilled water stream at a temperature of say 4.44 degrees C (40 degrees F). Zone 2 is an absorber section. The first vapor is absorbed into an absorbing solution J₃₂ that is sprayed into the zone by the sprayer. The heat released in the absorption operation is released to a heat exchange medium M₀₂. The heated medium exits as the M₂₄ stream. The diluted absorbing solution J₂₃ is pumped by a pump 40 to Zone 3, which is a generator section. The diluted absorbing solution is heated by a heating medium H₀₃ which is cooled and exits as H₃₀ stream. A vapor stream V₃₄ is generated and the absorbing solution is concentrated to the original strength. The concentrated solution is heat exchanged with the dilute absorbing solution ( the heat exchanger is not shown in the figure) and is pumped by a pump 40A and returned to Zone 2 as the J₃₂ stream. The vapor stream V₃₄ is condensed by a cooling medium. The condensate L₄₁ is pumped by a pump 41A to Zone 1. The cooling medium M₀₂ is used to remove the heat of absorption in zone 2 to become the M₂₄ stream, which is further used to absorb the heat of condensation in Zone 4 and then discharged from the system as the M₄₀ stream. A part of the water sprayed in Zone 1 is vaporized. The remainder, L₁₁, is pumped by a pump 41 as recycle to Zone 1. The pressure of the first vapor V₁₂ is illustrated by the horizontal line 42 in Figure 6. The initial absorbing condition and the final absorbing condition in zone 2 are illustrated by points 43 and 44 respectively. The diluted absorbing solution is heat exchanged and sent into the generator (Zone 3). The initial condition and the final condition in the generator are respectively illustrated by points 45 and 46.

The degree of temperature lifting that can be accomplished in a single stage absorption refrigeration is rather limited, because of the presence of saturation curves of lithium bromide as lithium bromide hydrate and because of the need of rejecting heat to readily available cooling water. In order to reject heat to cooling water at 32 degrees C (90 degrees F), the absorbing temperature has to be around 43 degrees C (110 degrees F). However, in order to absorb water vapor at 1.81 Torrs, for example, the absorbing temperature has to be at less than 15.5 degrees C (60 degrees F) in order not to form crystals of lithium bromide hydrate crystals. It will be shown that by using a multiple steage absorption refrigeration system of the present invention, the problem described can be avoided. The process can circumvent the saturation region.

Figure 7 illustrates a double stage absorption refrigeration system with a Type A pressure enhancer. By referring to Figures 1, 5, and 7, one can recognize that the system of Figure 7 can be obtained by inserting a Type A pressure enhancer of Figure 1 into a conventional absorption refrigeration system of Figure 5. The system comprises a first vessel 47 and a second vessel 48. In the first vessel, there are two main vertical partitioners 49 and 50 and a multitude of vertical partitioners 51. There are a first processing zone 52, a second processing zone 53, a third processing zone 54 and a fourth processing zone 55. Zone 1 is a first vapor generation zone; zone 2 is a first vapor absorption zone for absorbing the first vapor; Zone 3 is a second vapor generation zone; and zone 4 is a second absorption zone absorbing the second vapor. In the second vessel, there is a main partitioner 56 that separates the vessel into a fifth processing zone 57 (Zone 5) and a sixth processing zone 58 (Zone 6). Zone 5 is a generator section; Zone 6 is a condenser section. There is a first spraying device 59 in Zone 2; there is a second spraying device 60 in Zone 3; there is a third spraying device 61 in Zone 4.
There are heat transfer coils 62, 63, and 64 respectively in Zone 4, Zone 5, and Zone 6. There are pumps 65, 66, 67, 68, 69, and 70 for circulating various liquid streams. There are narrow vertical compartments 71 in Zone 2 and there are narrow vertical compartments 72 in Zone 3.

There are two absorption operations taking place in Zone 2 and Zone 4. Therefore, the degree of temperature lifting that can be accomplished in this system is much greater than that of a conventional single stage system. In operation, a feed L₀₁ is introduced into Zone 1 and is subjected to a solid-liquid-vapor multiple phase transformation operation to form a first vapor V₁₂ and a solid-liquid mixture K₁₀ under a first pressure P₁. The first vapor is absorbed in an absorbing solution J₄₂ and the heat is used to generate a second water vapor under a second pressure P₂ from a water stream L₆₃ + L₃₃. This pressure enhancement is accomplished by a Type A enhancement operation. The second vapor V₃₄ is absorbed by an absorbing solution J₅₄ and the heat released in this absorption operation is removed by a heat transfer medium M₀₄. The diluted absorbing solution 73 (J₂₅ stream) is sent to the generator (Zone 5) by the pump 65. The solution is subjected to an evaporation operation by the heating medium H₀₅ to produce a concentrated absorbing solution 77 (J₅₄ stream), which is heat exchanged with the cold solution J₂₅ and pumped by the pump 66 to Zone 4. The diluted absorbing solution 76 (J₄₂ stream) is pumped by the pump 67 and is introduced into Zone 2. A part of the water L₆₃ + L₃₃ is vaporized to become the second vapor V₃₄. The remaining liquid L₃₃ is pumped by the pump 68 and recycled to Zone 3. The vapor formed in the generator V₅₆ is condensed; a part of the condensate L₆₀ is discharged from the system by the pump 69. The remaining condensate L₆₃ is pumped by the pump 70 and returned to Zone 3.

There are two absorption operations taking place in the system and the solutions are diluted by the absorption operations and concentrated by the generator section. A series arrangement is illustrated in the system of Figure 7. The concentrated absorption solution J₅₄ enters Zone 4 and is diluted by absorbing the second vapor V₃₄ to form a diluted absorbing solution J₄₂ which becomes the absorbing solution in Zone 2. This solution is further diluted by absorbing the first vapor V₁₂ to become a twice diluted absorbing solution J₂₅, which is regenerated in the generator.

The operating conditions of the two absorption operations and the regeneration operation are illustrated in Figure 8. The pressure of the first vapor V₁₂ is illustrated by the horizontal line 81. The initial and final absorbing conditions in Zone 2 are respectively illustrated by point 82 and 83. The second vapor is formed at a temperature illustrated by 83A and the condition of the second vapor is illustrated by point 84. The second vapor is absorbed in the second absorption operation. The initial and final absorbing conditions in the second absorption operation are illustrated by points 85 and 86. The twice diluted absorbing solution 83 is heat exchanged and regenerated in the generator section. The initial and final conditions in the generator are illustrated by point 87 and 88. The conditions of the absorbing solutions follow the loop with a first step from 87 and 88 in the generator, a second step from 85 to 86 in the absorption operation in Zone 4 and a third step, from 82 and 83 in the absorption operation in Zone 2.

The system illustrated in Figure 9 is similar to the system illustrated by Figure 7. It also contains two vessels 47 and 48. Equivalent parts in the two figures are referred to by the same number. Therefore, the descriptions and operational procedures described in connection with the system of Figure 7 can be used to describe the system and operating procedures of the system of Figure 9. The only difference between the two systems are the flow arrangements of the absorbing solutions. In the system of Figure 9, a parallel flow arrangement is shown. The absorbing solution after being concentrated in the generator section is divided into two streams, J₅₄ and J₅₂, which are respectively used as absorbing solutions in Zone 4 and Zone 2. The diluted absorbing solutions J₄₅ and J₂₅ are heat exchanged and returned to the generator to be reconcentrated.

The conditions of the two absorbing operations and the reconcentration operation in the system of Figure 9 are illustrated by various points in Figure 10. The pressure of the first vapor is shown by the horizontal line 89. The initial condition and the final condition of the absorption operation in Zone 2 are illustrated by points 90 and 91. The second vapor is generated at the temperature of point 91A. The condition of the second vapor is illustrated by point 92. The initial and final absorption conditions in Zone 4 are illustrated by points 93 and 94. The two diluted absorbing solutions 91 and 94 are both returned to the generator. The initial and final conditions of the solution in the generator are illustrated by points 95 and 96.

It is noted that the absorbing solutions returned to the generator in the parallel arrangement are of lower concentration than that of a series arrangement. Therefore, the operation condition of the generator in the parallel arrangement are milder than those in the series arrangement. One may use a multiple effect evaporator in reconcentrating the absorbing solutions.

Figure 11 illustrates a system with two Type A pressure enhancing units. It also has two absorbers. The two diluted absorbing solutions are shown to be regenerated in two separate generators. The system comprises a first vessel 97, a second vessel 98, and a third vessel 99. The first vessel has a first processing zone 100 (Z-1) that contains a first vapor generator, a second processing zone 101 (Z-2) that contains an absorber for the first vapor, a third processing zone 102 (Z-3) that contains a second vapor generator, a fourth processing zone 103 (Z-4) that contains an absorber for the second vapor, a fifth processing zone 104 (Z-5) that contains a third vapor generator, and a sixth processing zone 105 (Z-6) that contains a condenser for the third vapor. The second vessel contains a seventh zone 106 (Z-7) which contains a first generator and an eighth zone 107 (Z-8) which contains a first condenser. The third vessel contains a ninth zone 108 (Z-9) that contains a second generator and a tenth zone (Z-10) that contains a second condenser.

In operation, a first vapor V₁₂ is generated in Zone 1; the first vapor is subjected to a first Type A pressure enhancement to generate a second vapor V₃₄; the second vapor is subjected to a second Type A pressure enhancement to generate a third vapor V₅₆; the third vapor is condensed in Zone 6 by a cooling water available. The first diluted absorbing solution J₂₇ is regenerated in zone 7 and is returned as J₇₂; the second diluted absorbing solution J₄₉ is regenerated in Zone 9 and is returned as J₉₄. The vapor streams V₇₈ and V₉₁₀ that are generated in the generators are condensed in the condensers in Zone 8 and Zone 10 respectively.

The conditions prevailing in the vapor generation operations, the vapor absorption operations and absorption solution regeneration operations are illustrated by various points in Figure 12. The pressure of the first vapor V₁₂ is illustrated by the horizontal line 110; the initial and final conditions of the absorption operation in zone 2 are illustrated by points 111 and 112; the temperature of generating the second vapor is shown by point 113; the conditions of the second vapor V₃₄ is shown by point 114; the initial and final conditions of the absorption operation in zone 4 are shown by points 115 and 116; the temperature at which the third vapor is generated is shown by point 117; the condition of the third vapor is shown by point 118. The initial and final conditions in the regeneration of the first diluted absorbing solutions are illustrated by points 119 and 120; the initial and final conditions in the regeneration of the second absorbing solution are illustrated by points 121 and 122.

The system illustrated by Figure 13 has a Type B pressure enhancer. This system is similar to the system of Figure 7 and can be obtained by replacing the Type A pressure enhancer by the Type B pressure enhancer. The operations of the two systems are similar.

The system has a first vessel 123 and a second vessel 124. The first vessel contains a first zone 125 (Z-1) that contains a first vapor generator, a second zone 126 (Z-2) that contains an absorber for the first vapor, a third zone 127 that contains a second vapor generator and a fourth zone 128 that contains an absorber for the second vapor. The second vessel has a fifth zone 130 that contains a generator and a sixth zone 129 that contains a condenser. There are sprayers 131, 132, and 133 in Zone 2, Zone 3 and Zone 4 respectively; there are heat transfer coils 134, 135, 136, 137, and 138 in the zones. There are pumps 139, 140, 141, 142, and 143 for circulating various liquid streams. Since the system description and system operation are similar to those of the system of Figure 7 detailed descriptions are omitted.

Figure 14 illustrates a Type A multiple phase transformation process with coupled vapor absorption and crystal melting (MPTAM) operations. In this system, the first vapor formed in a solid-liquid-vapor multiple phase transformation operation is subjected to a Type A vapor pressure enhancement operation using a first absorbing solution to thereby produce a second vapor whose pressure is higher than the triple point pressure of the solvent crystals. The second vapor is brought in contact with a mass of solvent crystals to thereby simultaneously condense the second vapor and melt the solvent crystals. The system requires an auxiliary refrigeration system to maintain the system under a properly balanced state. The needed auxiliary refrigeration is accomplished by absorbing a fraction of the second vapor into a second absorbing solution and removing the heat of absorption by a cooling medium at a readily available temperature. The first absorbing solution and the second absorbing solution may be the same solution and be regenerated together.

The system comprises a first vessel 145, a second vessel 146 and a third vessel 147. There is a type A pressure enhancer in the first vessel. The first vessel contains a first zone 148 (Z-1) that contains a first vapor generator, a vertical wall partition 149, a second processing zone 150 (Z-2) that contains an absorber for the first vapor, a third processing zone 151 (Z-3) that contains a second vapor generator, a fourth processing zone 152 (Z-4) that contains a crystal melter, a fifth processing Zone 153 that contains an absorber for an excess second vapor. The second vessel contains a sixth processing zone 154 that contains a generator for regenerating the absorbing solution and a seventh processing zone 155 that contains a vapor condenser. The third vessel contains an eighth processing zone (Z-8) that contains a crystal washer.

The system can be used in conducting a solid-liquid-vapor multiple phase transformation process. A feed L₀₁ is introduced in zone 1 and is subjected to a multiple phase transformation to produce a first vapor V₁₂ and a solid-liquid mixture K₁₈. The first vapor is subjected to a Type A pressure enhancement to produce a second vapor V₃₄. The crystals in the solid-liquid mixture K₁₈ are washed and purified in Zone 8 to produce a concentrate L₈₀ and a purified solid-liquid mixture K₈₄. The second vapor is brought in contact with K₈₄ in Zone 4, condenses and simultaneously melts the crystals to produce a purified product L₄₀. Because of heat leakage into the system and imperfect heat exchange operations, the amount of second vapor produced is greater than the amount that can be condensed by melting the crystals in K₈₄. Therefore, there is some excess second vapor V₄₅. The excess second vapor is absorbed by a second absorption operation and the heat of absorption is removed by a cooling medium entering as M₀₅ and leaving as M₅₀. The diluted absorbing solution J₂₆ from Zone 2 and the diluted absorbing solution J₅₆ from zone 5 are reconstituted in the generator in Zone 6 by a heating medium that enters as H₀₆ and leaves as H₆₀. The concentrated absorbing solution is divided into two streams J₆₂ and J₆₅ and are respectively used in Zone 2 and Zone 5. The vapor V₆₇ formed in the generator is condensed in Zone 7 by a cooling medium that enters as M₀₇ and leaves as M₇₀.

Figure 15 shows a block process diagram of the Type A MPTAM system illustrated by Figure 14 and illustrates the functions of the various zones. The system comprises a multiple phase transformation zone (Zone 1), a temperature elevating first vapor absorption zone (Zone 2), a second vapor generation zone (Zone 3), a simultaneous condensation-melting zone (Zone 4), an auxiliary heat rejection zone (Zone 5), absorbing solution regeneration zones (Zones 6 and 7) and a solvent crystal purification zone (Zone 8). Figure 16 illustrates the processing steps involved.

Referring to Figures 15 and 16, the process comprises:

Step 1: Multiple Phase Transformation - A mass of liquid feed L₀₁ is introduced into the multiple phase transformation zone 1 that is maintained under a pressure lower than the vapor pressure of the solution in the zone at its freezing temperature to thereby form a first vapor, V₁₂, and a first condensed mass, K₁₈, containing a first mass of solvent crystals, S₁₈, and a mother liquor, M₁₈.

Step 2: Temperature Elevating First Vapor Absorption - The first vapor, V₁₂, is absorbed into an absorbing solution, J₆₂, in Zone 2 to form a diluted or weak absorbing solution, J₂₆. The absorbing solution in the zone contains a properly selected solute within a proper concentration range so that, while the absorption pressure is near or somewhat lower than the multiple phase transformation pressure in Zone 1, the absorption temperature is somewhat higher than the second vapor generation temperature of Step 3 to be described. The absorption solution J₆₂ is diluted by this absorption operation to become the diluted absorbing solution, J₂₆. The diluted absorbing solution is then concentrated back to the original concentration in Step 5 to be described.

Step 3: Second Vapor Generation - A mass of liquid, normally a mass of solvent, is vaporized in Zone 3 to form a mass of second vapor, V₃₄, whose condensing temperature is near or somewhat higher than the melting temperature of the second condensed mass in Zone 4. Zone 3 is separated from Zone 2 by heat conducting wall(s). Zone 2 and Zone 3 are in a heat exchange relation, and the heat of vaporization is provided by the heat released in the absorption step. Step 4 is conducted by bringing the second vapor, V₃₄, into heat exchange relation with the second condensed mass in Zone 4 to thereby simultaneously condense the second vapor and melt the solvent crystals in the solid-liquid mixture K₈₄. The second vapor may be brought into a direct or indirect contact heat exchange relation to accomplish the desired simultaneous condensation and crystal melting operations. The liquid solvent used for the second vapor generation may either come from Zone 4, L₄₃, or from zone 7, L₇₃.

Step 4: Simultaneous Condensation-Melting - A second condensed mass (slush), K₈₄, containing a second mass of solvent crystals, S₈₄, is placed in Zone 4. A mass of second vapor, V₈₄, is brought into contact with the second condensed mass to melt the solvent crystals. The purified solvent liquid L₄ is divided into a product, L₄₀, and a mass L₄₈, that is recycled to Zone 8 for crystal washing. One may also recycle a stream L₄₃ to Zone 3 for generating second vapor.

Step 5: Regeneration of the Absorbing Solution - The diluted absorbing solution, J₂₆ and J₅₆, are combined and the combined stream is concentrated in Zone 6 to produce a mass of enriched absorbing solution J₆₂ and J₆₅ which is returned to zones 2 and 5 and a mass of purified solvent L₇₃. This concentration operation can be accomplished in many ways, such as (a) single effect evaporation, (b) a multiple effect evaporation, (c) a single effect vapor compression evaporation, (d) a multiple effect vapor compression evaporation, (e) a freezing operation, etc. It is noted that low grade heat such as waste heat from various sources may be used to drive this concentration step. A mass of low pressure steam from a co-generation plant is a convenient heat source for this regeneration operation.

Step 6: Crystal Purifications - The first condensed mass, K₁₈, obtained in step 1, may be subjected to a crystal purification operation in Zone 8 using some purified solvent L₄₈ to produce a mass of concentrate L₈₀ and a second condensed mass, K₈₄, which is subjected to the step 4 operation described.

Step 7: Solvent Recycling - A portion of the purified solvent produced in steps 4 and 5, L₄₃ and/or L₇₃, is recycled to zone 3 for generating the second vapor; another portion of the purified solvent, L₄₈ and/or L₇₈, is recycled to Zone 8 for crystal washing.

Step 8: Auxiliary Cooling - Due to heat leakages into the system and temperature differentials needed for heat exchange operations, there is a need for an auxiliary cooling operation. In other words, there is an excess second vapor that cannot be condensed by melting the mass of solvent crystals. The auxiliary cooling can be accomplished by condensing the excess second vapor, or by absorbing it into an absorbing solution J₆₅ to thereby produce a diluted absorbing solution J₅₆ which is regenerated in Zones 6 and 7. The heat of absorption Q₅₀ is rejected to a cooling water stream.

Figure 17 illustrates an integrated system in which Type B MPTAM Process can be conducted. The system comprises a main unit 157, and a crystal washing unit 158. The main unit comprises a vacuum vessel, 159, that contains a multiple phase transformation Zone 160 (Zone 1), a temperature elevating first vapor absorption Zone 161 (Zone 2), a solvent crystal melting Zone 162 (Zone 4), an absorbing solution regenerating Zone 163 and 164 (Zones 6 and 7), and an auxiliary cooling unit 165. The regeneration zone is divided into an evaporation sub-zone 163 and vapor condensing sub-zone 164. Rotating screws or disks, 165, are used to conduct the multiple phase transformation operation in Zone 1. It is noted that in Type B MPTAM system, there is no second vapor generation operation. The system used is quite similar to a system used in absorption refrigeration that is used to produce chill water manufactured by companies such as Trane Co., in Wisconsin, and Carrier Corp., in Syracuse, N.Y.

In operation, feed L₀₁ is introduced in Zone 1, to form a first vapor, V₁₂, and a solid-liquid mixture, K₁₈. The first vapor and a recycled enriched absorbing solution, J₆₂, are introduced into Zone 2 and a solvent solid-liquid mixture, K₈₄, is introduced into Zone 4. Zone 4 is inside of heat conductive conduits that are placed within Zone 2. The first vapor is absorbed into the absorbing solution to form diluted absorbing solution J₂₆, and the heat released in the absorbing operation is utilized to melt the solvent crystals in Zone 4, and thereby form purified solvent L₄. A portion of the purified solvent, L₄₈, is recycled to Zone 8 to wash solvent crystals; the rest becomes purified solvent product L₄₀.

The need and structure of the auxiliary cooling unit 165 is similar to those described in connection with the Type A MPTAM system. The operation conducted in Zone 1 of a Type B system is also similar to that in a Type A system described. The diluted absorbing solution, J₂₆, is subjected to an evaporation operation in Zone 6 using some low grade heat and the vapor so formed is condensed by cooling water in Zone 7.

As has been described, the key features in the MPTAM processes are: (1) temperature elevation of first vapor absorption and (2) heat coupling between the first vapor absorption operation in Zone 2 and the melting operation of the solvent solid in Zone 4. Temperature elevation is defined as the difference between the absorption temperature in Zone 2 and the multiple phase transformation temperature T₁ in Zone 1. The absorption pressure P₂ is near or somewhat lower than the multiple phase transformation pressure P₁ in Zone 1. for a given solute used in formulating the absorbing solution, the concentration to be used depends on the amount of temperature elevation needed. For a given solute used, there is a limit to the degree of temperature elevation attainable. This limit may be set by the solubility limit or viscosity limit.

For ease of conducting the first vapor absorption operation and for ease of regenerating the absorbing solution, it is desirable to use as low a concentration absorbing solution as possible. It is therefore important to reduce the degree of temperature elevation needed. Reduction of the temperature differential is needed for heat coupling, i.e. T₂-T₄. This value may be as high as 10 degrees Centigrade. However, it is desirable to limit this value to less than 5 degrees Centigrade or even less than 3 degrees Centigrade.

Figure 18 shows a schematic illustratioin of a system in which Type B MPTAM Process of figure 17 is conducted. The system comprises a multiple phase transformation zone (Zone 1), a temperature elevating first vapor absorption zone (Zone 2), a solvent crystal melting zone (Zone 4), an absorbing solution regeneration zone (Zones 6 and 7), and a solvent crystal purification zone (Zone 8). Figure 19 illustrates the processing steps. As shown by these two figures, the processing steps in the Type B MPTAM Process are similar to the processing steps in the Type A MPFAM Process, with the following exceptions: (a) Second vapor is not generated, (b) the latent heat of melting a mass of purified solvent crystals (step 4) is supplied by transferring heat from Zone 2 to Zone 4 through heat conducting walls. Therefore, the latent heat released in the first vapor absorption step is utilized in supplying the latent heat needed in melting the solvent crystals.

Freeze dryers operate in the range of 20 to 750 microns. Conventional ways of handling the low pressure vapor in a freeze dryer are to use four and five stage steam jets or to use rotary-piston oil sealed pumps and rotary-blower-rotary-piston oil-sealed pump. It is, however, more economical to use an absorption vapor pressure enhancer system of the present invention to handle the low pressure vapor. Because of pressure is very low, two or more stages of temperature lifting absorption are needed.

A freeze drying process may be conducted in the systems illustrated in Figures 7, 9, and 11. It is noted that in each of these systems, there are two stages of temperature lifting vapor absorption. The operations of a freeze drying system is similar with the MPTAM Process. Therefore, a detail description is omitted.

In conclusion, the following remarks are presented:
(1) A cooling medium is needed to remove heat from an absorption operation or a condensation operation. It is important to distinguish an internal cooling medium from an external cooling medium. An internal cooling medium is one that is regenerated and recycled within the system. For example, L₆₃ and L₃₃ in Figure 7 that are used to remove heat of absorption in Zone 2 and thereby partially vaporized is an internal cooling medium because the water that becomes the second vapor is absorbed in Zone 4 and is recovered and recycled after being vaporized in Zone 5 and condensed in Zone 6. An external cooling medium refers to a cooling medium that is not recycled within the system. Examples are (a) ambient air, (b) well water, lake water, and river water and (c) cooling water recycled from a cooling tower in which heat has been rejected to the ambient air.
(2) An external cooling medium is available at 26.6 to 32.2 degrees Centigrade (80 to 90 degrees F) and can be used until its temperature reaches 43.3 to 49 degrees Centigrade (110 to 120 degrees F).
(3) A conventional absorption refrigeration system can remove heat at 40 degrees F and is therefore able to produce chilled water at 40 degrees F. It has not been able to produce ice. A system of the present invention can remove heat at a much lower temperature. Therefore, it can be used to produce ice.
(4) The word "stage" will be used to refer both to a vapor absorption operation and a pressure enhancement operation. A unit represented by either Figure 1 and Figure 3 has one stage of pressure enhancement; a system of Figure 7 or Figure 9 has one stage of pressure enhancement and two stages of vapor absorption; a system of Figure 11 has two stages of pressure enhancements and two stages of vapor absorption; a system of Figure 13 or Figure 14 has one stage of pressure enhancement and two stages of vapor absorption.
(5) Terminology used in the claims to be presented is illustrated as follows: Referring to Figure 11, a feed vapor is subjected to an N-stage (N=2) absorption vapor pressure enhancement operation in a processing system having N processing zones, respectively designated as PE-1, PE-2,
   ----, PE-n, ----, PE-N Zones. In the figure, PE-1 represents Z-2, 101 and Z-3, 102, and PE-2 represents Z-4, 103 and Z-5, 104. Each pressure enhancing zone, PE-n Zone, has a n-th stage first vapor absorbing sub-zone designated as PEA-n sub-zone and an n-th stage second vapor generation sub-zone designated as PEB-n sub-zone. Referring to Figure 11, Z-2 is PEA-1 and Z-3 is PEB-1, Z-4 is PEA-2 and Z-5 is PEB-2. The n-th stage first vapor is designated as (V_{A})ₙ and the n-th stage second vapor is designated as (V_{B})ₙ. Therefore, V₁₂ in Figure 11 is (V_{A})₁. V₃₄ is both (V_{B})₁ and (V_{A})₂ and V₅₆ is (V_{B})₂. The absorbing solution used in the PE-n zone is designated as (J_{A})ₙ. The absorbing temperature in PE-n zone is designated as (Tⱼ)ₙ; the pure solvent saturation temperature of the n-th stage first vapor is designated as (T_{A})ₙ. The pressure in the n-th stage first vapor absorption sub-zone is designated as (P_{A})ₙ; the pressure in the n-th stage second vapor generation sub-zone is designated as (P_{B})ₙ. Since the processing zones are located in sequence, (V_{B})ₙ becomes (V_{A})ₙ₊₁, and (P_{A})ₙ₊₁ is somewhate lower than (P_{B})ₙ. Due to the temperature lifting vapor absorption, (Tⱼ)ₙ is substantially higher than (T_{A})ₙ and is also higher than (T_{B})ₙ. (T_{B})ₙ is also higher than (T_{A})ₙ.

## Claims

1. A process of separating a feed mixture that is at least partly in liquid state and contains a major component that is both volatile and crystallizable by a solid-liquid-vapor multiple phase transformation operation that comprises:
(A) a first main step of simultaneously vaporizing and crystallizing the mixture under a pressure (P_{A})₁ that is lower than the vapor pressure of the mixture at its freezing temperature to thereby form an initial vapor and a first condensed mass that contains a mass of solid of the major component;
(B) a second main step of subjecting the initial vapor to an N-stage absorption vapor pressure enhancement operation, wherein N is one or more than one, in a processing system having N pressure enhancing zones, respectively designated and as PE-1, PE-2---,PE-n,---, PE-N zones, to thereby produce a product vapor under a higher output pressure (P_{B})_{N}, each pressure enhancing zone PE-n zone, having an n-th stage first vapor absorption sub-zone, designated as PEA-n sub-zone, and an n-th stage second vapor generation sub-zone, designated as PEB-n sub-zone, the n-th stage first vapor and the n-th stage second vapor being respectively designated as (V_{A})ₙ and (V_{B})ₙ, the processing zones being placed in sequence and the n-th stage second vapor (V_{B})ₙ becoming the next stage first vapor (V_{A})ₙ₊₁, the process conducted on the n-th stage pressure enhancing zone comprises:
(a) A first sub-step of absorbing the n-th stage first vapor into an n-th stage absorbing solution (J_{A})ₙ containing the solvent and one or more low volatility solutes under a pressure (P_{A})ₙ and at an absorbing temperature (Tⱼ)ₙ that is higher than the pure solvent saturation temperature (T_{A})ₙ corresponding to the pressure (P_{A})ₙ,
(b) A second sub-step of transmitting the heat released in the absorbing step in the PEA-n sub-zone to a liquid containing the solvent in the PEB-n sub-zone to thereby generate an n-th stage second vapor (V_{B})ₙ under a pressure (P_{B})ₙ that is substantially higher than (P_{A})ₙ.

2. A process of Claim 1, wherein the n-th stage first vapor absorption sub-zone, PEA-n, and the n-th stage second vapor sub-zone, PEB-n, are separated by one or more substantially vertical heat conductive walls, the absorbing solution in the PEA-n sub-zone forms a first liquid film on one side of each vertical wall, the solvent containing liquid in the PEB-n sub-zone forms a second liquid film on the other side of each vertical wall, so that the heat released in absorbing the first vapor into the first liquid film is transmitted through the wall to supply the heat needed in vaporizing the solvent from the second liquid film.

3. A process of Claim 1, wherein a first heat exchange coil is placed in the n-th stage first vapor absorption sub-zone, PEA-n, and a second heat exchange coil is placed in the n-th stage second vapor generation sub-zone, PEB-n, an absorbing solution is applied on the outer surface of the first coil, a solvent containing liquid is applied on the outer surface of the second coil, the two coils are connected to form a loop and a heat transfer medium is circulate through the loop so that the heat generated in the absorption step is transmitted through the heat exchange medium to supply the heat needed in the second vapor generation step.

4. A process of any one of Claims 1, 2, and 3, wherein the second vapor (V_{B})_{N} generated from the last pressure enhancement zone, PE-N, is subjected to a simple condensation operation by rejecting the heat of condensation to an external cooling medium.

5. A process of any one of Claims 1, 2, and 3, wherein the second vapor (V_{B})_{N} generated from the last pressure enhancement zone, FE-N, is subjected to another temperature lifting absorption operation using another absorbing solution and the heat released in the absorption operation is rejected to an external cooling medium.

6. A process of claim 4, wherein the external cooling medium is at a temperature near the ambient temperature.

7. A process of claim 5, wherein the external cooling medium is at a temperature near the ambient temperature.

8. A process of claim 1, which further comprises a processing step of bringing the second vapor (V_{B})_{N} from the last pressure enhancing zone, PE-N, in heat exchange relation with a mass of solvent solid derived from the first condensed mass to thereby simultaneously condense the vapor and melt the solvent solid.

9. A process of claim 8, wherein the second (V_{B})_{N} vapor from the last pressure enhancing zone PE-N, is brought in direct contact with the solvent solid to thereby simultaneously condense the vapor and melt the solvent solid.

10. A process of any of claims 1, 8 and 9 wherein the number of pressure enhancing stages N is one.

11. A process of any of claims 1, 8 and 9 wherein the number of pressure enhancing stages N is more than one.

12. A process of separating a feed mixture that contains a major component that is both volatile and crystallizable by a freeze drying operation that comprises:
(A) a first main step of subjecting the feed mixture in solid phase state to a sublimination operation under a reduced pressure to produce a low pressure initial vapor, designated a FD vapor;
(B) a second main step of subjecting the initial vapor to an N-stage absorption vapor pressure enhancement operation, wherein N is one or more than one, in a processing system having N pressure enhancing zones, respectively designated as PE-1, PE-2,---,PE-n,---, PE-N zones, to thereby produce a product vapor under a higher output pressure (P_{B})_{N}, each pressure enhancing zone PE-n zone, having an n-th stage first vapor absorption sub-zone, designated as PEA-n sub-zone, and an n-th stage second vapor generation sub-zone, designated as PEB-n sub-zone, the n-th stage first vapor and the n-th stage second vapor being respectively designated as (V_{A})ₙ and (V_{B})ₙ, the processing zones being placed in sequence and the n-th stage second vapor (V_{B})ₙ becoming the next stage first vapor (V_{A})ₙ₊₁, the process conducted in the n-th stage pressure enhancing zone comprises:
(a) A first sub-step of absorbing the n-th stage first vapor into an n-th stage absorbing solution (J_{A})ₙ containing the solvent and one or more low volatility solutes under a pressure (P_{A})ₙ and at an absorbing temperature (Tⱼ)ₙ that is substantially higher than the pure solvent saturation temperature (T_{A})ₙ corresponding to the pressure (P_{A})ₙ.
(b) A second sub-step of transmitting the heat released in the absorbing step in the PEA-n sub-zone to a liquid containing the solvent in the PEB-n sub-zone to thereby generate an n-th stage second vapor (V_{B})ₙ under a pressure (P_{B})ₙ that is substantially higher than (P_{A})ₙ.

13. A process of claim 12, wherein the last stage second vapor is condensed by rejecting heat to an external cooling medium.

14. A process of claim 12, wherein the last stage second vapor is subjected to a temperature elevating absorption operation and the heat of absorption is rejected to an external cooling medium.

15. A process of either claim 13 or claim 14 wherein the external cooling medium is at a temperature near the ambient temperature.

16. A process of any of claims 12, 13 and 14 wherein the number pressure enhancing stages N is one.

17. A process of any of claims 12, 13 and 14 wherein the number of pressure enhancing stages N is more than one.

18. A process of any of claims 1,2,3,8,9,12,13,14 and 15 wherein the solvent is water.

19. A process of any of claims 1,2,3,8,9,12,13,14 and 15 wherein the solvent is a non-aqueous solvent.

20. An apparatus for separating a feed mixture that is at least partly in liquid state and contains a major component that is both volatile and crystallizable by a solid-liquid-vapor multiple phase transformation operation that comprises:
(A) a first main processing zone maintained under a pressure (P_{A})₁ that is lower than the vapor pressure of the mixture at its freezing temperature, wherein the feed mixture is subjected to a simultaneous vaporisation and crystallization operation to thereby form an initial vapor and a first condensed mass that contains a mass of solid of the major component;
(B) a second main processing zone for subjecting the initial vapor to an N-stage absorption vapor pressure enhancement operation to thereby produce a product vapor under a higher output pressure (P_{B})_{N}, wherein N is one or more than one, that comprises:
(1) A vessel that contains N pressure enhancing zones, respectively denoted as PE-1, PE-2, --, PE-n, ---, PE-N zones, each pressure enhancing zone, PE-n, contains an n-th stage first vapor absorption sub-zone, denoted as PEA-n sub zone, and an n-th stage second vapor generation sub-zone, denoted as PEB-n sub-zone, the pressure enhancing zones being arranged in sequence thereby the second vapor generation sub-zone, PEB-n, of an n-th stage is connected to the first vapor absorption sub-zone of the next stage, PEA-(n+1), and the second vapor generated in an n-th stage (V_{B})ₙ becoming the first vapor to be absorbed in the next stage (V_{A})ₙ₊₁,
(2) A first vapor passage feeding n-th stage first vapor (V_{A})ₙ into PEA-n sub-zone,
(3) A second vapor passage removing n-th stage second vapor (V_{B})ₙ from PEB-n sub-zone,
(4) A first interface providing means for providing a substantial liquid-vapor interaction surface in PEA-n for absorption of the first vapor into an n-th stage absorption solution (J_{A})ₙ,
(5) A second interface providing means for providing a substantial liquid-vapor interaction surface in PEB-n for vaporizing a liquid-mass containing the solvent,
(6) A heat transfer means for transferring heat of absorption from PEA-n sub-zone to PEB-n sub-zone,
the apparatus upon
(1) introducing the feed vapor into PEA-1 sub-zone,
(2) introducing an absorbing solution (J_{A})ₙ in PEA-n in sub-zone, and
(3) introducing a solvent containing liquid in PEB-n sub-zone,
causing the following transformations:
(1) absorption of n-th stage first vapor (V_{A})ₙ into n-th stage absorbing solution (J_{A})ₙ releasing n-th stage heat of absorption,
(2) transmission of n-th stage heat of absorption released in PEA-n sub-zone through the n-th stage heat transfer means to the solvent containing liquid in PEB-n sub-zone,
(3) generation of n-th stage second vapor in PEB-n sub-zone,
(4) flow of n-th stage second vapor (V_{B})ₙ from PE-n zone to PE-(n+1) zone to become (n+1)th stage first vapor (V_{A})ₙ₊₁, thereby the second vapor generated from the last stage becoming the product vapor.

21. An apparatus of claim 20, wherein a set of substantially vertical walls separates the n-th stage first vapor absorption sub-zone, PEA-n sub-zone, from the n-th stage second vapor generation sub-zone, PEB-n sub-zone, one side of the walls serving as the first interface providing means for forming a liquid film of the absorbing solution (J_{A})ₙ, in PEA-n sub-zone, the other side of the walls serving as the second interface providing means for forming a liquid film of the solvent containing liquid (L_{B})ₙ in PEB-n sub-zone, and the walls serving as the heat transfer means between PEA-n and PEB-n sub-zones.

22. An apparatus of claim 21, the set of vertical walls in PE-n zone divide the zones and form a first set of compartments, respectively and sequentially denoted as (A₁)ₙ, (A₂)ₙ,----, (Aₙ)ₙ, ----, (A_{N})ₙ compartments, and a second set of compartments, respectively and sequentially denoted as (B₁)ₙ, (B₂)ₙ, ----, (Bₙ)ₙ, ----, (B_{N})ₙ compartments, the two sets of compartments being respectively in PEA-n and PEB-n sub-zones and forming an alternating array of compartments.

23. An apparatus of claim 20, which comprises a n-th stage first heat transfer coil in PEA-n sub-zone, a n-th stage second heat transfer coil in PEB-n sub-zone, the two coils being connected to form a loop, a pumping means for circulating a heat exchange medium through the loop of coils, the outer surface of the first coil serving as the first interface providing means, the outer surface of the second coil serving as the second interface providing means and the walls of the coils and the circulating heat exchange medium together serving as the heat transfer means.

24. An apparatus of claim 20, which further comprises a solvent solid melting zone in which the last stage second vapor (V_{B})_{N} is brought in heat exchange relation with a mass of solvent solid derived from the first MPT condensed mass to thereby simultaneously condense the vapor and melt the solvent solid.

25. An apparatus of claim 24, wherein the last stage second vapor is brought into direct contact with the solvent solid.

26. An apparatus of claim 24, wherein the number of pressure enhancing zone is one.

27. An apparatus of claim 24, wherein the number of pressure enhancing zone is more than one.

28. An apparatus for separating a feed mixture that contains a major component that is both volatile and crystallizable by a freeze drying operation that comprises:
(A) a first main processing zone maintained under a pressure (P_{A})₁ that is lower than the sublimation pressure of the mixture in solid phase state wherein the feed mixture in solid phase state is subjected to a sublimation operation to thereby form an initial vapor;
(B) a second main processing zone for subjecting the initial vapor to an N-stage absorption vapor pressure enhancement operation to thereby produce a product vapor under a higher output pressure (P_{B})_{N}, wherein N is one or more than one, that comprises:
(1) A vessel that contains N pressure enhancing zones, respectively denoted as PE-1, PE-2, ---, PE-n, ---, PE-N Zones, each pressure enhancing zone, PE-n, contains an n-th stage first vapor absorption sub-zone, denoted as PEA-n sub-zone, and as n-th stage second vapor generation sub-zone, denoted as PEB-n sub-zone, the pressure enhancing zones being arranged in sequence thereby the second vapor generation sub-zone, PEB-n, of an n-th stage is connected to the first vapor absorption sub-zone of the next stage, PEA-(n+1), and the second vapor generated in an n-th stage (V_{B})ₙ becoming the first vapor to be absorbed on the next stage (V_{A})ₙ₊₁,
(2) A first vapor passage feeding n-th stage first vapor (V_{A})ₙ into PEA-n sub-zone,
(3) A second vapor passage removing n-th stage second vapor (V_{B})ₙ from PEB-n sub-zone,
(4) A first interface providing means for providing a substantial liquid-vapor interaction surface in PEA-n for absorption of the first vapor into an n-th stage absorption solution (J_{A})ₙ,
(5) A second interface providing means for providing a substantial liquid-vapor interaction surface in PEB-n for vaporizing a liquid mass containing the solvent,
(6) A heat transfer means for transferring heat of absorption from PEA-n sub-zone to PEB-n sub-zone,
the apparatus upon
(1) introducing the feed vapor into PEA-1 sub-zone,
(2) introducing an absorbing solution (J_{A})ₙ in PEA-n sub-zone and
(3) introducing a solvent containing liquid in PEB-n sub-zone,
causing the following transformations:
(1) absorption of n-th stage first vapor (V_{A})ₙ into n-th stage absorbing solution (J_{A})ₙ releasing n-th stage heat of absorption,
(2) transmission of n-th stage heat of absorption released in PEA-n sub-zone through the n-th stage heat transformer means to the solvent containing liquid in PEB-n sub-zone,
(3) generation of n-th stage second vapor in PEB-n sub-zone,
(4) flow of n-th stage second vapor (V_{B})ₙ from PE-n zone to PE-(n+1) zone to become (n+1)th stage first vapor (V_{A})ₙ₊₁, thereby the second vapor generated from the last stage becoming the product vapor.

29. An apparatus of claim 28, which further comprises a heat rejection zone in which the last stage second vapor (V_{B})_{N} is condensed by rejecting heat to an external heat exchange medium.

30. An apparatus of claim 28, which further comprises a heat rejection zone in which the last stage second vapor (V_{B})_{N} is absorbed into another absorbing solution and the heat of absorption is removed by an external heat exchange medium.

31. An apparatus of claim 28 wherein the number of pressure enhancing zones is one.

32. An apparatus of claim 28 wherein the number of pressure enhancing zones is more than one.

33. A process of subjecting a feed mixture that is at least partly in liquid state and contains a volatile solvent for a solid-liquid-vapor multiple phase transformation operation that comprises
(1) A first step of introducing the feed mixture into a first zone (Zone 1) that is maintained under a first pressure that is lower than the vapor pressure of the mixture at its freezing temperature to thereby simultaneously vaporize the solvent and crystallize the solvent and thereby form a first vapor V₁₂ and a first condensed mass K₁₈ that contains a mass of solvent solid S₁₈,
(2) A second step of absorbing the first vapor V₁₂ into an absorbing solution J₆₂ containing the solvent and a solute in a concentration range in a second zone (Zone 2) such that while the absorption takes place under a pressure that is near or somewhat lower than the pressure prevailing in the first step, the absorbing temperature is somewhat higher than the melting temperature of the solvent solid.
(3) A third step of melting a mass of solvent solid that is derived from the first condensed mass in a fourth zone (Zone 4),
(4) A fourth step of establishing heat interaction between the second zone and the fourth zone so that at least a major part of the heat released in the second step is utilized in supplying the heat needed in the third step.

34. A process of Claim 33 wherein the absorption temperature in Step 2 is higher than the melting temperature of the solvent solid in Step 3 by less than ten degrees centigrade.

35. A process of Claim 33 wherein the absorbing temperature in Step 2 is higher than the melting temperature of the solvent solid in Step 3 by less than five degrees centigrade.

36. A process of Claim 33, 34 or 35 which further comprises:
(5) A fifth step of generating a second vapor from a mass of solvent liquid in a third zone, the third zone being separated from Zone 2 by one or more heat conductive separating walls, so that the heat released in Step 2 is transmitted through the wall to supply the heat needed in Step 5, and the process is further characterized in establishing heat interaction between the second vapor generated and the solvent solid in zone 4 so that the heat needed in Step 3 is supplied by condensing the second vapor.

37. A process of Claim 36 wherein the heat interaction between the second vapor and the solvent solid is accomplished by bringing the second vapor in contact with the solvent solid.

38. A process of claim 33, 34 or 35 which is further characterized in that the second zone and the fourth zone are separated by a heat conductive wall so that the heat released in Step 2 is transmitted through the separating wall to supply the heat needed in Step 3.

39. A process of Claim 38 wherein Zone 4 is confined within one or more conduits and the conduit wall is the separating wall between Zone 2 and Zone 4.

40. An apparatus for subjecting a feed mixture containing a volatile and crystallizable solvent to a solid-liquid-vapor multiple phase transformation operation that comprises:
(1) A vessel that contains three processing zones, respectively denoted as Zone 1, Zone 2, and Zone 4, and an intermediate zone separating Zone 2 and Zone 4, denoted as Zone 24,
(2) A first vapor passage between Zone 1 and Zone 2,
(3) A first vapor flow barrier preventing flow of vapor between Zone 2 and Zone 4,
(4) A first interface providing means for providing a substantial liquid-vapor interaction surface in Zone 1,
(5) A second interface providing means for providing a substantial liquid-vapor interaction surface in the intermediate zone, Zone 24,
(6) A first heat transfer means for transferring heat from Zone 2 to Zone 4,
the apparatus upon
(1) evacuating the vessel,
(2) introducing a feed mixture L₀₁ into Zone 1,
(3) introducing a absorbing solution J₆₂ into Zone 2,
(4) introducing a mass of solvent solid into Zone 4,
causing the following transformations:
(1) the feed mixture in Zone 1 undergoes simultaneous vaporization and solidification operations to form a first vapor V₁₂ and a solid-liquid mixture K₁₈ containing a mass of solvent solid S₁₈,
(2) the first vapor V₁₂ enters Zone 2 and is absorbed into the absorbing solution J₆₂ to form a diluted absorbing solution J₂₆,
(3) the heat released in the absorption operation in Zone 2 is transmitted through the first heat transfer means into Zone 4,
(4) the solvent solid S₆₂ in the solid-liquid mixture K₆₂ undergoes a melting operation upon receiving heat from the first heat transfer means.

41. An apparatus of Claim 40 wherein both the first vapor flow barrier and the first heat transfer means are a set of heat conductive walls of a first set of fluid conduits, and Zone 4 is inside of the first set of fluid conduits, and the second interface providing means to form a liquid film of absorbing solution is on the outer surfaces of the first set of fluid conduits.

42. An apparatus of either Claim 40 or 41 wherein the first interface providing means is rotating vertical or near vertical surfaces.

43. An apparatus of Claim 40 which further comprises
(7) a third processing zone, denoted as Zone 3 in the intermediate zone,
(8) a second interface providing means for providing a substantial liquid-vapor interaction surface in Zone 2,
(9) a third interface providing means for providing a substantial liquid-vapor interaction surface in Zone 3,
wherein both the first vapor flow barrier and the first heat transfer means are a set of heat conduction vertical walls, the second interface providing means is provided by forming a liquid film on a first side of the set of vertical walls and the third interface providing means is provided by forming liquid film on the other side of the set of vertical walls,
the apparatus upon
(1) evacuating of the vessel,
(2) introducing absorbing solution in Zone 2,
(3) introducing a mass of solvent liquid in Zone 3, and
(4) introducing a mass of solvent solid in Zone 4,
causing the following transformations
(1) the feed mixture in Zone 1 undergoes simultaneous vaporization and solidification operations to form a first vapor V₁₂ and a solid-liquid mixture K₁₈ containing a mass of solvent solid S₁₈,
(2) the first vapor V₁₂ enters Zone 2 and is absorbed into the absorbing solution J₆₂ to form a diluted absorbing solution J₂₆
(3) the heat released in the absorbing operation in Zone 2 is transmitted through the heat conduction wall to Zone 3,
(4) the mass of solvent liquid L₄₃ is vaporized to form a second vapor V₃₄ in Zone 3,
(5) the second vapor heat exchange with the solvent solid in Zone 4 to thereby undergo simultaneous condensation of second vapor and melting of the solvent solid to thereby form a mass of solvent liquid L₄.

44. An apparatus of claim 43 which further comprises a vapor passage between Zone 3 and Zone 4, so that the second vapor generated in Zone 3 can be brought in direct contact with the solvent solid in Zone 4 to accomplish simultaneous condensation of the second vapor and melting of the solvent solid.

45. An apparatus of claim 43 which comprises a first set of compartments in Zone 2, respectively and sequentially denoted as A₁, A₂, ---- A_{(N-1)} and A_{N} and a second set of compartments in Zone 3, respectively and sequentially denoted as B₁, B₂, ----, B_{(N-1)} and B_{N}, the two sets of compartments forming an alternating array of compartments, a heat conductive wall separating a compartment in the first set from two neighboring compartments in the second set.

## Patentansprüche

1. Verfahren zum Trennen einer Speisemischung, die sich zumindest teilweise im Flüssigzustand befindet und eine Hauptkomponente enthält, die mittels eines Verfahrens, das eine den Fest-, Flüssig- und Dampfzustand umfassende Vielfachphasentransformation ausführt, sowohl flüchtig als auch kristallisierbar ist, wobei dieses Verfahren folgende Schritte aufweist:
(A) einen ersten Hauptschritt, bei dem die Mischung unter einem Druck (P_{A})₁, der kleiner als der Dampfdruck der Mischung bei deren Gefriertemperatur ist, gleichzeitig verdampft und kristallisiert wird, wobei ein Initialdampf und eine erste Kondensatmenge gebildet wird, die eine Feststoffmenge der Hauptkomponenten enthält,
(B) einen zweiten Hauptschritt, bei dem der Initialdampf einem Verfahren zum Vergrößern des Dampfdrucks durch eine N-stufige Absorption ausgesetzt ist, wobei N größer gleich 1 ist, und zwar in einer Prozeßanlage, die N Druckvergrößerungszonen hat, die jeweils eine Bezeichnung aus der Reihe PE-1, PE-2,...PE-n,...PE-N tragen, um dabei einen Produktdampf unter einem höheren Ausgangsdruck (P_{B})_{N} zu erzeugen, wobei jede Druckvergrößerungszone PE-n in der n-ten Stufe eine dampfabsorbierende, erste Unterzone, die als Unterzone PEA-n bezeichnet ist, und in der n-ten Stufe eine dampferzeugende, zweite Unterzone aufweist, die als Unterzone PEB-n bezeichnet ist, wobei der in der n-ten Stufe gewonnene erste Dampf mit (V_{A})ₙ und der dort gewonnene zweite Dampf mit (V_{B})ₙ bezeichnet ist, wobei ferner die Prozeßzonen in Reihe angeordnet sind und der zweite Dampf (V_{B})ₙ in der n-ten Stufe zu einem ersten Dampf (V_{A})ₙ₊₁ in der nächsten Stufe wird und wobei das in der Druckvergrößerungszone der n-ten Stufe ausgeführte Verfahren folgende Schritte umfaßt:
(a) einen ersten Nebenschritt, bei dem der erste Dampf in der n-ten Stufe in einer absorbierenden Lösung (J_{A})ₙ der n-ten Stufe absorbiert wird, wobei diese Lösung ein Lösungsmittel und ein oder mehrere geringflüchtige, gelöste Stoffe enthält und wobei ein Druck (P_{A})ₙ und eine Absorptionstemperatur (T_{J})ₙ angewandt werden, die höher als die dem reinen, gelösten Stoff und dem Druck (P_{A})ₙ zugeordnete Sättigungstemperatur (T_{A})ₙ ist,
(b) einen zweiten Nebenschritt, bei dem die im Absorptionsschritt in der Unterzone PEA-n freiwerdende Wärme auf eine Flüssigkeit übertragen wird, die das Lösungsmittel in der Unterzone PEB-n enthält, um dabei in der n-ten Stufe einen zweiten Dampf (V_{B})ₙ unter einem Druck (P_{B})ₙ zu erzeugen, der wesentlich höher als (P_{A})ₙ ist.

2. Verfahren nach Anspruch 1, bei dem die Unterzone PEA-n für die Absorption des ersten Dampfs in der n-ten Stufe und die Unterzone PEB-n für den zweiten Dampf in der n-ten Stufe durch ein oder mehrere im wesentlichen vertikale, wärmeleitende Wände getrennt sind, wobei die Absorptionslösung in der Unterzone PEA-n einen ersten Flüssigfilm auf einer Seite jeder vertikalen Wand bildet und die das Lösungsmittel enthaltende Flüssigkeit in der Unterzone PEB-n einen zweiten Flüssigfilm auf der anderen Seite jeder vertikalen Wand bildet, so daß die beim Absorbieren des ersten Dampfs durch den ersten Flüssigfilm freiwerdende Wärme durch die Wand übertragen wird, um diese Wärme dem Verdampfungsprozeß des Lösungsmittels aus dem zweiten Flüssigfilm zuzuführen.

3. Verfahren nach Anspruch 1, bei dem eine erste Wärmeaustauschschlange in der Unterzone PEA-n für die Absorption des ersten Dampfs in der n-ten Stufe und eine zweite Wärmeaustauschschlange in der Unterzone PEB-n für die Erzeugung des zweiten Dampfs in der n-ten Stufe angeordnet ist, bei dem ferner eine das Lösungsmittel enthaltende Flüssigkeit der Außenfläche der zweiten Schlange zugeführt wird und bei dem die beiden Schlangen eine Schleife bilden und ein Wärmeübertragungsmedium durch diese Schleife zirkuliert, so daß die beim Absorptionsschritt erzeugte Wärme durch das Wärmeübertragungsmedium auf die für den Schritt zum Erzeugen des zweiten Dampfs benötigte Wärme übertragen wird.

4. Verfahren nach einem der Ansprüche 1 bis 3, bei dem der in der letzten Druckvergrößerungszone PE-N erzeugte zweite Dampf (V_{B})_{N} einem einfachen Kondensierungsvorgang ausgesetzt ist, bei dem die Kondensierungswärme auf ein externes Kühlmedium abgeführt wird.

5. Verfahren nach einem der Ansprüche 1 bis 3, bei dem der in der letzten Druckvergrößerungszone PE-N erzeugte zweite Dampf (V_{B})_{N} einem weiteren die Temperatur anhebenden Absorptionsvorgang unterworfen wird, bei dem eine andere Absorptionslösung benutzt und die bei dem Absorptionsvorgang freiwerdende Wärme an ein externes Kühlmedium abgeführt wird.

6. Verfahren nach Anspruch 4, bei dem das externe Kühlmedium eine Temperatur aufweist, die nahe der Umgebungstemperatur liegt.

7. Verfahren nach Anspruch 5, bei dem das externe Kühlmedium eine Temperatur aufweist, die nahe der Umgebungstemperatur liegt.

8. Verfahren nach Anspruch 1, das ferner einen Verfahrensschritt aufweist, bei dem der zweite Dampf (V_{B})_{N} von der letzten Druckvergrößerungszone PE-N in Wärmeaustauschbeziehung zu einer Lösungsmittelfeststoffmenge gebracht wird, die von der ersten Kondensatmenge abgeleitet ist, um dabei gleichzeitig den Dampf zu kondensieren und den Lösungsmittelfeststoff zu schmelzen.

9. Verfahren nach Anspruch 8, bei dem der zweite Dampf (V_{B})_{N} von der letzten Druckvergrößerungszone PE-N in direkten Kontakt mit dem Lösungsmittelfeststoff gebracht wird, um dabei gleichzeitig den Dampf zu kondensieren und den Lösungsmittelfeststoff zu schmelzen.

10. Verfahren nach einem der Ansprüche 1, 8 und 9, bei dem die Anzahl der Druckvergrößerungsstufen N eins ist.

11. Verfahren nach einem der Ansprüche 1, 8 und 9, bei dem die Anzahl der Druckvergrößerungsstufen N größer als eins ist.

12. Verfahren zum Trennen einer Speisemischung, die eine Hauptkonmponente aufweist, die sowohl flüchtig als auch durch einen Gefriertrocknungsvorgang kristallisierbar ist, wobei dieser Vorgang folgende Schritte aufweist:
(A) einen ersten Hauptschritt, bei dem die Speisemischung einem Subliminierungsvorgang unter einem verminderten Druck unterworfen wird, um einen einen niedrigen Druck aufweisenden Initialdampf zu erzeugen, der als Dampf FD bezeichnet ist,
(B) einen zweiten Hauptschritt, bei dem der Initialdampf einem Dampfdruckvergrößerungsvorgang mit einer N-stufigen Absorption unterworfen wird, wobei N eins oder mehr als eins ist, und zwar in einer Prozeßanlage, die N Druckvergrößerungszonen hat, die jeweils eine Bezeichnung aus der Reihe PE-1, PE-2,...PE-n,...PE-N tragen, um dabei einen Produktdampf unter einem höheren Ausgangsdruck (P_{B})_{N} zu erzeugen, wobei jede Druckvergrößerungszone PE-n in der n-ten Stufe eine dampfabsorbierende, erste Unterzone, die als Unterzone PEA-n bezeichnet ist, und in der n-ten Stufe eine dampferzeugende, zweite Unterzone aufweist, die als Unterzone PEB-n bezeichnet ist, wobei der in der n-ten Stufe gewonnene erste Dampf mit (V_{A})ₙ und der dort gewonnene zweite Dampf mit (V_{B})ₙ bezeichnet ist, wobei ferner die Prozeßzonen in Reihe angeordnet sind und der zweite Dampf (V_{B})ₙ in der n-ten Stufe zu einem ersten Dampf (V_{A})ₙ₊₁ in der nächsten Stufe wird und wobei das in der Druckvergrößerungszone der n-ten Stufe ausgeführte Verfahren folgende Schritte umfaßt:
(a) einen ersten Nebenschritt, bei dem der erste Dampf in der n-ten Stufe in einer absorbierenden Lösung (J_{A})ₙ der n-ten Stufe absorbiert wird, wobei diese Lösung ein Lösungsmittel und ein oder mehrere geringflüchtige, gelöste Stoffe enthält und wobei ein Druck (P_{A})ₙ und eine Absorptionstemperatur (T_{J})ₙ angewandt werden, die höher als die dem reinen, gelösten Stoff und dem Druck (P_{A})ₙ zugeordnete Sättigungstemperatur (T_{A})ₙ ist,
(b) einen zweiten Nebenschritt, bei dem die im Absorptionsschritt in der Unterzone PEA-n freiwerdende Wärme auf eine Flüssigkeit übertragen wird, die das Lösungsmittel in der Unterzone PEB-n enthält, um dabei in der n-ten Stufe einen zweiten Dampf (V_{B})ₙ unter einem Druck (P_{B})ₙ zu erzeugen, der wesentlich höher als (P_{A})ₙ ist.

13. Verfahren nach Anspruch 12, bei dem der zweite Dampf in der letzten Stufe durch Abführen der Wärme an ein externes Kühlmedium kondensiert wird.

14. Verfahren nach Anspruch 12, bei dem der zweite Dampf in der letzten Stufe einem die Temperatur anhebenden Absorptionsvorgang unterworfen und die Absorptionswärme an ein externes Kühlmedium abgeführt wird.

15. Verfahren nach Anspruch 13 oder 14, bei dem das externe Kühlmedium eine Temperatur aufweist, die nahe der Umgebungstemperatur liegt.

16. Verfahren nach einem der Ansprüche 12 bis 14, bei dem die Anzahl der Druckvergrößerungsstufen N gleich eins ist.

17. Verfahren nach einem der Ansprüche 12 bis 14, bei dem die Anzahl der Druckvergrößerungsstufen N größer als eins ist.

18. Verfahren nach einem der Ansprüche 1, 2, 3, 8, 9, 12-15, bei dem das Lösungsmittel Wasser ist.

19. Verfahren nach einem der Ansprüche 1, 2, 3, 8, 9, 12-15, bei dem das Lösungsmittel ein nichtwässriges Lösungsmittel ist.

20. Vorrichtung zum Trennen einer Speismischung, die zumindest teilweise im Flüssigzustand ist und eine Hauptkomponente enthält, die sowohl flüchtig als auch mittels eines Vorgangs, der eine den Fest,- Flüssig- und Dampfzustand umfassende Vielfachphasentransformation ausführt, kristallisierbar ist, wobei diese Vorrichtung folgendes aufweist:
(A) eine erste Hauptverarbeitungszone, die auf einem Druck (P_{A})₁ gehalten wird, der kleiner als der Dampfdruck der Mischung bei deren Gefriertemperatur ist, wobei die Speisemischung einem gleichzeitigen Verdampfungsvorgang und Kristallisierungsvorgang ausgesetzt wird, um dabei einen Initialdampf und eine erste Kondensatmenge zu bilden, die eine Feststoffmenge der Hauptkomponenten enthält,
(B) eine zweite Hauptverarbeitungszone, in der der Initialdampf einem Dampfdruckvergrößerungsvorgang mit einer N-stufigen Absorption unterworfen wird, um dabei einen Produktdampf unter einem höheren Ausgangsdruck (P_{B})_{N} zu erzeugen, wobei bei diesem Vorgang folgendes verwendet wird:
(1) ein Kessel mit N Druckvergrößerungszonen, die der Reihe nach als Zonen PE-1, PE-2,..., PE-n,..., PE-N bezeichnet sind, wobei jede Druckvergrößerungszone PE-n in der n-ten Stufe eine als Unterzone PEA-n bezeichnete Absorptionsunterzone für den ersten Dampf und in der n-ten Stufe eine als Unterzone PEB-n bezeichnete Absorptionsunterzone für den zweiten Dampf aufweist, wobei die Druckvergrößerungszonen in Reihe angeordnet sind und dabei die den zweiten Dampf erzeugende Unterzone PEB-n einer n-ten Stufe mit der für den ersten Dampf vorgesehenen Absorptionszone der nächsten Stufe PEA-(n+1) verbunden ist und wobei der in einer n-ten Zone (V_{B})ₙ erzeugte zweite Dampf zu einem ersten Dampf wird, der in der nächsten Stufe (V_{A})ₙ₊₁ zu absorbieren ist,
(2) einen für den ersten Dampf vorgesehenen Durchgang, durch den der erste Dampf (V_{A})ₙ der n-ten Stufe in die Unterzone PEA-n geleitet wird,
(3) einen für den zweiten Dampf vorgesehenen Durchgang, der den zweiten Dampf (V_{B})ₙ der n-ten Stufe aus der Unterzone PEB-n abführt,
(4) ein erstes Kopplungsmittel zur Schaffung einer Oberfläche in der Unterzone PEA-n für ein Zusammenwirken von im wesentlichen Flüssigkeit und Dampf und für eine Absorption des ersten Dampfs durch eine Absorptionslösung (J_{A})ₙ der n-ten Stufe,
(5) ein zweites Kopplungsmittel zur Schaffung einer Oberfläche für ein Zusammenwirken von im wesentlichen Flüssigkeit und Dampf in der Unterzone PEB-n und für eine Verdampfung einer das Lösunsmittel enthaltenden Flüssigmenge,
(6) ein Wärmeübertragungsmittel zur Übertragung der Absorptionswärme von der Unterzone PEA-n zur Unterzone PEB-n,
wobei die Vorrichtung auf folgende Vorgänge hin:
(1) Zuführen des Speisedampfs zur Unterzone PEA-1,
(2) Zuführen einer Absorptionslösung (J_{A})ₙ zur Unterzone PEA-n,
(3) Zuführen einer das Lösungsmittel enthaltenden Flüssigkeit zur Unterzone PEB-n,
folgende Transformationen bewirkt:
(1) Absorption des ersten Dampfs (V_{A})ₙ der n-ten Stufe durch die Absorptionslösung (J_{A})ₙ der n-ten Stufe, wobei die Absorptionswärme der n-ten Stufe frei wird,
(2) Übertragung der in der Unterzone PEA-n freigewordenen Absorptionswärme durch das Wärmeübertragungsmittel der n-ten Stufe zu der das Lösungsmittel enthaltenden Flüssigkeit in der Unterzone PEB-n,
(3) Erzeugung des zweiten Dampfs der n-ten Stufe in der Unterzone PEB-n,
(4) Strömung des zweiten Dampfs (V_{B})ₙ der n-ten Stufe von der Zone PE-n zur Zone PE-(n+1), um zum ersten Dampf (V_{A})ₙ₊₁ in der Stufe (n+1) zu werden, wobei der in der letzten Stufe erzeugte Dampf den Produktdampf ergibt.

21. Vorrichtung nach Anspruch 20, bei dem ein Satz von im wesentlichen vertikalen Wänden die den ersten Dampf in der n-ten Stufe absorbierende Unterzone PEA-n von der den zweiten Dampf in der n-ten Stufe absorbierenden Unterzone PEB-n trennt, wobei eine Seite der Wände als erstes Kopplungsmittel zur Bildung eines Flüssigfilms der Absorptionslösung (J_{A})ₙ in der Unterzone PEA-n dient, die andere Seite der Wände als zweites Kopplungsmittel zur Bildung eines Flüssigfilms der das Lösungsmittel enthaltenden Flüssigkeit (L_{B})ₙ in der Unterzone PEB-n dient und die Wände als Wärmeübertragunmgsmittel zwischen den Unterzonen PEA-n und PEB-n dienen.

22. Vorrichtung nach Anspruch 21, bei dem der Satz von vertikalen Wänden in der Zone PE-n die Zonen teilt und einen ersten Satz von Kammern, die der Reihe nach als (A₁)ₙ, (A₂)ₙ,..., (Aₙ)ₙ,..., (A_{N})ₙ bezeichnet sind, und einen zweiten Satz von Kammern bildet, die der Reihe nach als (B₁)ₙ, (B₂)ₙ,..., (Bₙ)ₙ,..., (B_{N})ₙ bezeichnet sind, wobei der eine Kammersatz in der Unterzone PEA-n und der andere Kammersatz in der Unterzone PEB-n abgeordnet ist und die Kammersätze ein wechselndes Kammerfeld bilden.

23. Vorrichtung nach Anspruch 20, die folgendes aufweist: in der n-ten Stufe eine erste Wärmeübertragungsschlange in der Unterzone PEA-n, in der n-ten Stufe eine zweite Wärmeübertragungsschlange in der Unterzone PEB-n, wobei die beiden Schlangen zu einer geschlossenen Schleife verbunden sind, und Pumpenmittel zur Umwälzung eines Wärmeaustauschmediums durch die Schlangenschleife, wobei die Außenfläche als zweites Kopplungsmittel dient und die Schlangenwände und das umgewälzte Wärmeaustauschmedium zusammen als Wärmeübertragungsmittel dienen.

24. Vorrichtung nach Anspruch 20, die ferner eine den Lösungsmittelfeststoff schmelzende Zone aufweist, in der der zweite Dampf (V_{B})ₙ in der letzten Stufe in Wärmeaustauschbeziehung zu einer Lösungmittelfeststoffmenge gebracht wird, die von der ersten MPT-Kondensatmenge abgeleitet ist, um dabei gleichzeitig den Dampf zu kondensieren und den Lösungsmittelfeststoff zu schmelzen.

25. Vorrichtung nach Anspruch 24, bei dem der zweite Dampf in der letzten Stufe in direkten Kontakt mit dem Lösungsmittelfeststoff gebracht wird.

26. Vorrichtung nach Anspruch 24, bei dem die Anzahl der Druckvergrößerungszonen eins ist.

27. Vorrichtung nach Anspruch 24, bei dem die Anzahl der Druckvergrößerungszonen größer als eins ist.

28. Vorrichtung zum Trennen einer Speisemischung, die eine Hauptkonmponente aufweist, die sowohl flüchtig als auch durch einen Gefriertrocknungsvorgang kristallisierbar ist, wobei diese Vorrichtung folgendes aufweist:
(A) eine erste Hauptverarbeitungszone, die auf einem Druck (P_{A})₁ gehalten wird, der kleiner als der Sublimierungsdruck der Mischung im Feststoffphasenzustand ist, wobei die Speisemischung im Feststoffphasenzustand einem Sublimierungsvorgang ausgesetzt wird, um dabei einen Initialdampf zu bilden,
(B) eine zweite Hauptverarbeitungszone, in der der Initialdampf einem Dampfdruckvergrößerungsvorgang mit einer N-stufigen Absorption unterworfen wird, um dabei einen Produktdampf unter einem höheren Ausgangsdruck (P_{B})_{N} zu erzeugen, wobei N eins oder größer als eins ist und folgendes verwendet wird:
(1) ein Kessel mit N Druckvergrößerungszonen, die der Reihe nach als Zonen PE-1, PE-2,..., PE-n,..., PE-N bezeichnet sind, wobei jede Druckvergrößerungszone PE-n in der n-ten Stufe eine als Unterzone PEA-n bezeichnete Absorptionsunterzone für den ersten Dampf und in der n-ten Stufe eine als Unterzone PEB-n bezeichnete Absorptionsunterzone für den zweiten Dampf aufweist, wobei die Druckvergrößerungszonen in Reihe angeordnet sind und dabei die den zweiten Dampf erzeugende Unterzone PEB-n einer n-ten Stufe mit der für den ersten Dampf vorgesehenen Absorptionszone der nächsten Stufe PEA-(n+1) verbunden ist und wobei der in einer n-ten Zone (V_{B})ₙ erzeugte zweite Dampf zu einem ersten Dampf wird, der in der nächsten Stufe (V_{A})ₙ₊₁ zu absorbieren ist,
(2) einen für den ersten-Dampf vorgesehenen Durchgang, durch den der erste Dampf (V_{A})ₙ der n-ten Stufe in die Unterzone PEA-n geleitet wird,
(3) einen für den zweiten Dampf vorgesehenen Durchgang, der den zweiten Dampf (V_{B})ₙ der n-ten Stufe aus der Unterzone PEB-n abführt,
(4) ein erstes Kopplungsmittel zur Schaffung einer Oberfläche in der Unterzone PEA-n für ein Zusammenwirken von im wesentlichen Flüssigkeit und Dampf und für eine Absorption des ersten Dampfs durch eine Absorptionslösung (J_{A})ₙ der n-ten Stufe,
(5) ein zweites Kopplungsmittel zur Schaffung einer Oberfläche für ein Zusammenwirken von im wesentlichen Flüssigkeit und Dampf in der Unterzone PEB-n und für eine Verdampfung einer das Lösunsmittel enthaltenden Flüssigmenge,
(6) ein Wärmeübertragungsmittel zur Übertragung der Absorptionswärme von der Unterzone PEA-n zur Unterzone PEB-n,
wobei die Vorrichtung auf folgende Vorgänge hin:
(1) Zuführen des Speisedampfs zur Unterzone PEA-1,
(2) Zuführen einer Absorptionslösung (J_{A})ₙ zur Unterzone PEA-n,
(3) Zuführen einer das Lösungsmittel enthaltenden Flüssigkeit zur Unterzone PEB-n,
folgende Transformationen bewirkt:
(1) Absorption des ersten Dampfs (V_{A})ₙ der n-ten Stufe durch die Absorptionslösung (J_{A})ₙ der n-ten Stufe, wobei die Absorptionswärme der n-ten Stufe frei wird,
(2) Übertragung der in der Unterzone PEA-n freigewordenen Absorptionswärme durch das Wärmeübertragungsmittel der n-ten Stufe zu der das Lösungsmittel enthaltenden Flüssigkeit in der Unterzone PEB-n,
(3) Erzeugung des zweiten Dampfs der n-ten Stufe in der Unterzone PEB-n,
(4) Strömung des zweiten Dampfs (V_{B})ₙ der n-ten Stufe von der Zone PE-n zur Zone PE-(n+1), um zum ersten Dampf (V_{A})ₙ₊₁ in der Stufe (n+1) zu werden, wobei der in der letzten Stufe erzeugte Dampf den Produktdampf ergibt.

29. Vorrichtung nach Anspruch 28, die ferner eine Wärmeabführungszone aufweist, in der der zweite Dampf (V_{B})ₙ der letzten Stufe durch das Abführen von Wärme an ein externes Wärmeaustauschmedium kondensiert wird.

30. Vorrichtung nach Anspruch 28, die ferner eine Wärmeabführungszone aufweist, in der der zweite Dampf (V_{B})ₙ der letzten Stufe in einer anderen Absorptionslösung absorbiert und die Absorptionswärme durch ein externes Wärmeaustauschmedium abgeführt wird.

31. Vorrichtung nach Anspruch 28, bei dem die Anzahl der Druckvergrößerungszonen eins ist.

32. Vorrichtung nach Anspruch 28, bei dem die Anzahl der Druckvergrößerungszonen größer als eins ist.

33. Verfahren, bei dem eine Speisemischung, die sich zumindest teilweise im Flüssigzustand befindet und ein flüchtiges Lösungsmittel enthält, einem Vorgang ausgesetzt wird, der eine den Fest-, Flüssig- und Dampfzustand umfassende Vielfachphasentransformation ausführt, wobei dieses Verfahren folgende Schritte aufweist:
(1) einen ersten Schritt, bei dem die Speisemischung einer ersten Zone (Zone 1) zugeführt wird, die unter einem ersten Druck gehalten wird, der kleiner als der Dampfdruck der Mischung bei deren Gefriertemperatur ist, um dabei gleichzeitig das Lösungsmittel zu verdampfen und zu kristallisieren und dabei einen ersten Dampf V₁₂ und eine erste Kondensatmenge K₁₈ zu bilden, die eine Lösungsmittelfeststoffmenge S₁₈ enthält,
(2) einen zweiten Schritt, bei dem der erste Dampf V₁₂ von einer Absorptionslösung J₆₂ absorbiert wird, die das Lösungsmittel und einen gelösten Stoff in einem Konzentrationsbereich in einer zweiten Zone (Zone 2) enthält, und zwar derart, daß während des Ablaufs der Absorption unter einem Druck, der nahe bei dem oder etwas kleiner als der im ersten Schritt vorhandene Druck ist, die Absorptionstemperatur etwas höher als die Schmelztemperatur des Lösungsmittelfeststoffs ist.
(3) einen dritten Schritt, bei dem eine Lösungsmittelfeststoffmenge geschmolzen wird, die von der ersten Kondensatmenge in einer vierten Zone (Zone 4) abgeleitet ist,
(4) einen vierten Schritt, bei dem ein Wärmezusammenspiel zwischen der zweiten Zone und der vierten Zone in der Weise stattfindet, daß mindestens ein Hauptteil der beim zweiten Schritt freiwerdenden Wärme für die Zuführung von Wärme benutzt wird, die beim dritten Schritt benötigt wird.

34. Verfahren nach Anspruch 33, bei dem die Absorptionstemperatur in Schritt 2 um weniger als 10°C höher als die Schmelztemperatur des Lösungsmittelfeststoffs in Schritt 3 ist.

35. Verfahren nach Anspruch 33, bei dem die Absorptionstemperatur in Schritt 2 um weniger als 5°C höher als die Schmelztemperatur des Lösungsmittelfeststoffs in Schritt 3 ist.

36. Verfahren nach Anspruch 33, 34 oder 35, das ferner aufweist:
(5) einen fünften Schritt, bei dem aus einer Lösungsmittelflüssigkeitsmenge in einer dritten Zone ein zweiter Dampf erzeugt wird, wobei die dritte Zone von der Zone 2 durch ein oder mehrere wärmeleitende Trennwände getrennt ist, so daß die in Schritt 2 freiwerdende Wärme durch die Wand übertragen wird, um die in Schritt 5 benötigte Wärme zuzuführen, und daß das Verfahren ferner dadurch gekennzeichnet ist, daß ein Wärmezusammenspiel zwischen dem erzeugten zweiten Dampf und dem Lösungsmittelfeststoff in Zone 4 stattfindet, so daß die beim Schritt 3 benötigte Wärme durch Kondensieren des zweiten Dampfs zugeführt wird.

37. Verfahren nach Anspruch 36, bei dem das Wärmezusammenspiel zwischen dem zweiten Dampf und dem Lösungsmittelfeststoff dadurch zustandegebracht wird, daß der zweite Dampf in Kontakt mit dem Lösungsmittelfeststoff gebracht wird.

38. Verfahren nach Anspruch 33, 34 oder 35, das ferner dadurch gekennzeichnet ist, daß die zweite Zone und die vierte Zone durch eine wärmeleitende Wand getrennt sind, so daß die in Schritt 2 freiwerdende Wärme durch die Trennwand übertragen wird, um die in Schritt 3 benötigte Wärme zuzuführen.

39. Verfahren nach Anspruch 38, bei dem die Zone 4 sich in einer oder mehreren Rohrleitungen befindet und die Rohrleitungswand die Trennwand zwischen Zone 2 und Zone 4 ist.

40. Vorrichtung, bei der eine ein flüchtiges und kristallisierbares Lösungsmittel enthaltende Speisemischung einem Vorgang ausgesetzt wird, der eine den Fest-, Flüssig- und Dampfzustand umfassende Vielfachphasentransformation ausführt, wobei diese Vorrichtung folgendes aufweist:
(1) einen Kessel mit drei Verarbeitungszonen, die entsprechend als Zone 1, Zone 2 und Zone 3 bezeichnet sind, und mit einer als Zone 24 bezeichneten Zwischenzone, die die Zone 2 und Zone 4 trennt,
(2) einen ersten Dampfdurchgang zwischen Zone 1 und Zone 2,
(3) eine erste Dampfstromsperre, die einen Dampfstrom zwischen Zone 2 und Zone 4 verhindert,
(4) ein erstes Kopplungsmittel zur Schaffung einer bedeutenden Fläche in Zone 1, wobei diese Fläche für eine Flüssigkeit-Dampf-Wechselwirkung vorgesehen ist,
(5) ein zweites Kopplungsmittel zur Schaffung einer bedeutenden Fläche in der Zwischenzone 24, wobei diese Fläche für eine Flüssigkeit-Dampf-Wechselwirkung vorgesehen ist,
(6) ein erstes Wärmeübertragungsmittel zur Übertragung von Wärme von der Zone 2 zur Zone 4,
wobei die Vorrichtung auf folgende Vorgänge hin:
(1) Evakuieren des Kessels,
(2) Zuführen einer Speisemischung L₀₁ zur Zone 1,
(3) Zuführen einer Absorptionslösung J₆₂ zur Zone 2,
(4) Zuführen einer Lösungsmittelfeststoffmenge zur Zone 4,
folgende Tranformationen bewirkt:
(1) die Speisemischung in zone 1 unterliegt einem gleichzeitigen Verdampungs- und Erstarrungsvorgang, bei dem ein erster Dampf V₁₂ und eine Feststoff-Flüssigkeits-Mischung K₁₈ gebildet wird, die eine Lösungsmittelfeststoffmenge S₁₈ enthält,
(2) der erste Dampf V₁₂ tritt in die Zone 2 ein und wird von der Absorptionslösung J₆₂ absorbiert, wobei eine verdünnte Absorptionslösung J₂₆ gebildet wird,
(3) die beim Absorptionsvorgang in zone 2 freigesetzte Wärme wird durch das erste Wärmeübertragungsmittel zur Zone 4 übertragen,
(4) der Lösungsmittelfeststoff S₆₂ in der Feststoff-Flüssigkeits-Mischung K₆₂ unterliegt einem Schmelzvorgang nach Erhalt der Wärme vom ersten Wärmeübertragungsmittel.

41. Vorrichtung nach Anspruch 40, bei dem sowohl die erste Dampfstromsperre als auch das erste Wärmeübertragungsmittel ein Satz aus wärmeleitenden Wänden aus einem ersten Satz von Flüssigkeitsrohrleitungen ist und das zweite Kopplungsmittel zur Bildung eines Flüssigfilms der Absorptionslösung sich auf der Außenfläche des ersten Satzes von Flüssigkeitsrohrleitungen befindet.

42. Vorrichtung nach Anspruch 40 oder 41, bei dem das erste Kopplungsmittel sich um vertikale oder nahezu vertikale Flächen dreht.

43. Vorrichtung nach Anspruch 40, die ferner aufweist:
(7) eine dritte Verarbeitungszone, die als Zone 3 in der Zwischenzone bezeichnet ist,
(8) ein zweites Kopplungsmittel zur Schaffung einer Fläche für eine Flüssigkeit-Dampf-Wechselwirkung in Zone 2,
(9) ein drittes Kopplungsmittel zur Schaffung einer bedeutenden Zone für eine Flüssigkeit-Dampf-Wechselwirkung in Zone 3,
wobei sowohl die erste Dampfstromsperre als auch das erste Wärmeübertragungsmittel ein Satz aus wärmeleitenden Vertikalwänden sind, das zweite Kopplungsmittel durch Bildung eines Flüssigfilms auf einer ersten Seite des Satzes aus Vertikalwänden vorgesehen ist und das dritte Kopplungsmittel durch Bildung eines Flüssigfilms auf der anderen Seite des Satzes aus Vertikalwänden vorgesehen ist,
wobei die Vorrichtung auf folgende Vorgänge hin:
(1) Evakuieren des Kessels,
(2) Zuführen der Absorptionslösung zur Zone 2,
(3) Zuführen einer Lösungsmittelflüssigkeitsmenge zur Zone 3 und
(4) Zuführen einer Lösungsmittelfeststoffmenge zur Zone 4
folgende Transformationen bewirkt:
(1) die Speisemischung in Zone 1 unterliegt einem gleichzeitigen Verdampfungs- und Erstarrungsvorgang, bei dem ein erster Dampf V₁₂ und eine Feststoff-Flüssigkeits-Mischung K₁₈ gebildet wird, die eine Lösungsmittelfeststoffmenge S₁₈ enthält,
(2) der erste Dampf V₁₂ tritt in die Zone 2 ein und wird von der Absorptionslösung J₆₂ absorbiert, wobei eine verdünnte Absorptionslösung J₂₆ gebildet wird,
(3) die beim Absorptionsvorgang in Zone 2 freigesetzte Wärme wird durch die wärmeübertragende Wand zur Zone 3 übertragen,
(4) die Lösungsmittelflüssigkeitsmenge L₄₃ wird vedampft und bildet dabei einen zweiten Dampf V₃₄ in Zone 3,
(5) die Wärme des zweiten Dampfs wird dem Lösungsmittelfeststoff in zone 4 zugeführt, wobei gleichzeitig der zweite Dampf kondensiert und der Lösungsmittelfeststoff geschmolzen wird, um dabei eine Lösungsmittelflüssigkeitsmenge L₄ zu bilden.

44. Vorrichtung nach Anspruch 43, die ferner einen Dampfdurchgang zwischen Zone 3 und Zone 4 aufweist, so daß der in zone 3 erzeugte zweite Dampf in direkten Kontakt mit dem Lösungsmittelfeststoff in zone 4 gebracht werden kann, um gleichzeitig ein Kondensieren des zweiten Dampfs und ein Schmelzen des Lösungsmittelfeststoffs zu erreichen.

45. Vorrichtung nach Anspruch 43, die ferner in zone 2 einen ersten Satz aus Kammern, die der Reihe nach als A1, A₂,..., A_{(N-1)} und A_{N} bezeichnet sind, und in zone 3 einen zweiten Satz aus Kammern, die der Reihe nach als B₁, B₂,..., B_{(N-1)} und B_{N} bezeichnet sind, aufweist, wobei die beiden Kammersätze ein wechselndes Kammerfeld bilden und eine wärmeleitende Wand eine Kammer des ersten Satzes von zwei benachbarten Kammern des zweiten Satzes trennt.

## Revendications

1. Procédé de séparation d'un mélange d'alimentation qui est au moins partiellement à l'état liquide et qui contient un composant principal qui est à la fois volatil et cristallisable par une opération de multiples transformations de phases solide-liquide-vapeur, qui comprend :
(A) une première étape principale dans laquelle on vaporise et on cristallise simultanément le mélange sous une pression (P_{A})₁ qui est inférieure à la pression de vapeur du mélange à sa température de congélation pour former ainsi une vapeur initiale et une première masse condensée qui contient une masse de solides du composant principal ;
(B) une deuxième étape principale dans laquelle on soumet la vapeur initiale à une opération d'augmentation de pression de vapeur par absorption à N étages, dans laquelle N est égal ou supérieur à 1, dans un système de traitement ayant N zones d'augmentation de pression, respectivement désignées zones PE-1, PE-2, ---, PE-n, ---, PE-N, pour produire ainsi une vapeur de produit sous une pression de sortie supérieure (P_{B})_{N}, chaque zone d'augmentation de pression PE-n, ayant une sous-zone d'absorption de première vapeur du n^{ième} étage, désignée en tant que sous-zone PEA-n, et une sous-zone de génération de deuxième vapeur du n^{ième} étage, désignée en tant que sous-zone PEB-n, la première vapeur du n^{ième} étage et la deuxième vapeur du n^{ième} étage étant respectivement désignées en tant que (V_{A})ₙ et (V_{B})ₙ, les zones de traitement étant placées en séquence et la deuxième vapeur du n^{ième} étage (V_{B})ₙ devenant la première vapeur de l'étage suivant (V_{A})ₙ₊₁, le procédé conduit sur la zone d'augmentation de pression du n^{ième} étage comprenant :
(a) une première sous-étape dans laquelle on absorbe la première vapeur du n^{ième} étage dans une solution d'absorption du n^{ième} étage (J_{A})ₙ contenant le solvant et un ou plusieurs solutés de faible volatilité sous une pression (P_{A})ₙ et à une température d'absorption (Tⱼ)ₙ qui est supérieure à la température de saturation du solvant pur (T_{A})ₙ correspondant à la pression (P_{A})ₙ,
(b) une deuxième sous-étape dans laquelle on transmet la chaleur dégagée dans l'étape d'absorption dans la sous-zone PEA-n à un liquide contenant le solvant dans la sous-zone PEB-n pour produire ainsi une deuxième vapeur de n^{ième} étage (V_{B})ₙ sous une pression (P_{B})ₙ qui est sensiblement supérieure à (P_{A})ₙ.

2. Procédé selon la revendication 1, dans lequel la sous-zone d'absorption de la première vapeur du n^{ième} étage, PEA-n, et la sous-zone de génération de la deuxième vapeur du n^{ième} étage, PEB-n, sont séparées par une ou plusieurs parois pratiquement verticales et conductrices de la chaleur, la solution absorbante dans la sous-zone PEA-n forme un premier film liquide sur un côté de chaque paroi verticale, le liquide contenant le solvant dans la sous-zone PEB-n forme un deuxième film liquide sur l'autre côté de chaque paroi verticale, de telle sorte que la chaleur dégagée dans l'absorption de la première vapeur dans le premier film liquide est transmise à travers la paroi pour fournir la chaleur nécessaire pour vaporiser le solvant provenant du deuxième film liquide.

3. Procédé selon la revendication 1, dans lequel un premier serpentin d'échange de chaleur est placé dans la sous-zone d'absorption de la première vapeur du n^{ième} étage, PEA-n, et un deuxième serpentin d'échange de chaleur est placé dans la sous-zone de génération de la deuxième vapeur du n^{ième} étage, PEB-n, une solution absorbante est appliquée sur la surface extérieure du premier serpentin, un liquide contenant un solvant est appliqué sur la surface extérieure du deuxième serpentin, les deux serpentins sont raccordés pour former une boucle et un milieu de transfert de chaleur circule à travers la boucle de telle sorte que la chaleur générée dans l'étape d'absorption est transmise par le milieu d'échange de chaleur pour fournir la chaleur nécessaire dans l'étape de génération de la deuxième vapeur.

4. Procédé selon l'une quelconque des revendications 1, 2 et 3, dans lequel la deuxième vapeur (V_{B})_{N} générée de la dernière zone d'augmentation de pression, PE-N, est soumise à une simple opération de condensation pour rejeter la chaleur de condensation dans un milieu de refroidissement extérieur.

5. Procédé selon l'une quelconque des revendications 1, 2 et 3, dans lequel la deuxième vapeur (V_{B})_{N} générée de la deuxième zone d'augmentation de pression, PE-N, est soumise à une autre opération d'absorption élevant la température en utilisant une autre solution absorbante et la chaleur dégagée dans l'opération d'absorption est rejetée dans un milieu de refroidissement extérieur.

6. Procédé selon la revendication 4, dans lequel le milieu de refroidissement extérieur est à une température voisine de la température ambiante.

7. Procédé selon la revendication 5, dans lequel le milieu de refroidissement extérieur est à une température voisine de la température ambiante.

8. Procédé selon la revendication 1, qui comprend en outre une étape de traitement dans laquelle on amène la deuxième vapeur (V_{B})_{N} provenant de la dernière zone d'augmentation de pression, PE-N, en relation d'échange thermique avec une masse de solvant solide dérivée de la première masse condensée pour ainsi condenser la vapeur et fondre simultanément le solvant solide.

9. Procédé selon la revendication 8, dans lequel la deuxième vapeur (V_{B})_{N} provenant de la dernière zone d'augmentation de pression, PE-N, est amenée en contact direct avec le solvant solide pour ainsi condenser la vapeur et fondre simultanément le solvant solide.

10. Procédé selon l'une des revendications 1, 8 et 9, dans lequel le nombre d'étages d'augmentation de pression N est égal à 1.

11. Procédé selon l'une des revendications 1, 8 et 9, dans lequel le nombre d'étages d'augmentation de pression N est supérieur à 1.

12. Procédé de séparation d'un mélange d'alimentation, qui contient un composant principal qui est à la fois volatil et cristallisable par une opération de lyophilisation, qui comprend :
(A) une première étape principale dans laquelle on soumet le mélange d'alimentation à l'état de phase solide à une opération de sublimation sous une pression réduite pour produire une vapeur initiale à basse pression, désignée en tant que vapeur FD ;
(B) une deuxième étape principale dans laquelle on soumet la vapeur initiale à une opération d'augmentation de la pression de vapeur par absorption à N étages, dans laquelle N est égal ou supérieur à 1, dans un système de traitement ayant N zones d'augmentation de pression, respectivement désignées en tant que zones PE-1, PE-2, ---, PE-n, ---, PE-N, pour produire ainsi une vapeur de produit sous une pression de sortie supérieure (P_{B})_{N}, chaque zone d'augmentation de pression PE-n, ayant une sous-zone d'absorption d'une première vapeur du n^{ième} étage, désignée en tant que sous-zone PEA-n, et une sous-zone de génération d'une deuxième vapeur du n^{ième} étage, désignée en tant que sous-zone PEB-n, la première vapeur du n^{ième} étage et la deuxième vapeur du n^{ième} étage étant respectivement désignées en tant que (V_{A})ₙ et (V_{B})ₙ, les zones de traitement étant placées en séquence et la deuxième vapeur du n^{ième} étage (V_{B})ₙ devenant la première vapeur de l'étage suivant (V_{A})ₙ₊₁, le procédé conduit dans la zone d'augmentation de pression du n^{ième} étage comprenant :
(a) une première sous-étape dans laquelle on absorbe la première vapeur du n^{ième} étage dans une solution d'absorption du n^{ième} étage (J_{A})ₙ contenant le solvant et un ou plusieurs solutés de faible volatilité sous une pression (P_{A})ₙ et à une température d'absorption (Tⱼ)ₙ qui est notablement supérieure à la température de saturation du solvant pur (T_{A})ₙ correspondant à la pression (P_{A})ₙ,
(b) une deuxième sous-étape dans laquelle on transmet la chaleur dégagée dans l'étape d'absorption dans la sous-zone PEA-n à un liquide contenant le solvant dans la sous-zone PEB-n pour générer ainsi une deuxième vapeur du n^{ième} étage (V_{B})ₙ sous une pression (P_{B})ₙ qui est sensiblement supérieure à (P_{A})ₙ.

13. Procédé selon la revendication 12, dans lequel la deuxième vapeur du dernier étage est condensée en rejetant la vapeur dans un milieu de refroidissement extérieur.

14. Procédé selon la revendication 12, dans lequel la deuxième vapeur du dernier étage est soumise à une opération d'absorption élevant la température et la chaleur d'absorption est rejetée dans un milieu de refroidissement extérieur.

15. Procédé selon la revendication 13 ou la revendication 14, dans lequel le milieu de refroidissement extérieur est à une température voisine de la température ambiante.

16. Procédé selon l'une des revendications 12, 13 et 14, dans lequel le nombre des étages d'augmentation de pression, N, est égal à un.

17. Procédé selon l'une des revendications 12, 13 et 14, dans lequel le nombre des étages d'augmentation de pression, N, est supérieur à un.

18. Procédé selon l'une des revendications 1, 2, 3, 8, 9, 12, 13, 14 et 15, dans lequel le solvant est l'eau.

19. Procédé selon l'une des revendications 1, 2, 3, 8, 9, 12, 13, 14 et 15, dans lequel le solvant est un solvant non aqueux.

20. Appareil pour séparer un mélange d'alimentation qui est au moins en partie à l'état liquide et qui contient un composant principal qui est à la fois volatil et cristallisable par une opération de multiples transformations de phases solide-liquide-vapeur, qui comprend :
(A) une première zone de traitement principale maintenue sous une pression (P_{A})₁ qui est inférieure à la pression de vapeur du mélange à sa température de congélation, dans laquelle le mélange d'alimentation est soumis à une opération de vaporisation et de cristallisation simultanées pour former ainsi une vapeur initiale et une première masse condensée qui contient une masse de solides du composant principal ;
(B) une deuxième zone de traitement principale pour soumettre la vapeur initiale à une opération d'augmentation de la pression de vapeur par absorption à N étages, pour produire ainsi une vapeur de produit sous une pression de sortie supérieure (P_{B})_{N}, dans laquelle N est égal ou supérieur à 1, qui comprend :
(1) un récipient qui contient N zones d'augmentation de pression, respectivement dénotées en tant que zones PE-1, PE-2, ---, PE-n, ---, PE-N, chaque zone d'augmentation de pression, PE-n, contenant une sous-zone d'absorption d'une première vapeur du n^{ième} étage, dénotée sous-zone PEA-n, et une sous-zone de génération d'une deuxième vapeur du n^{ième} étage, dénotée sous-zone PEB-n, les zones d'augmentation de pression étant disposées en séquence, la sous-zone de génération de la deuxième vapeur, PEB-n, d'un n^{ième} étage étant raccordée à la sous-zone d'absorption de la première vapeur de l'étage suivant, PEA-(n+1), et la deuxième vapeur générée dans un n^{ième} étage (V_{B})ₙ devenant la première vapeur à absorber dans l'étage suivant (V_{A})ₙ₊₁ ;
(2) un passage de première vapeur amenant la première vapeur du n^{ième} étage, (V_{A})ₙ, dans la sous-zone PEA-n ;
(3) un passage de deuxième vapeur retirant la deuxième vapeur du n^{ième} étage, (V_{B})ₙ, de la sous-zone PEB-n ;
(4) un moyen procurant une première interface pour procurer une surface d'interaction importante liquide-vapeur dans la sous-zone PEA-n pour l'absorption de la première vapeur dans une solution d'absorption du n^{ième} étage, (J_{A})ₙ ;
(5) un moyen procurant une deuxième interface pour procurer une surface d'interaction importante liquide-vapeur dans PEB-n pour vaporiser une masse liquide contenant le solvant ;
(6) un moyen de transfert de chaleur pour transférer la chaleur d'absorption de la sous-zone PEA-n à la sous-zone PEB-n ;
l'appareil, lors de :
(1) l'introduction de la vapeur d'alimentation dans la sous-zone PEA-1,
(2) l'introduction d'une solution absorbante (J_{A})ₙ dans la sous-zone PEA-n, et
(3) l'introduction d'un liquide contenant un solvant dans la sous-zone PEB-n,
causant les transformations suivantes :
(1) absorption de la première vapeur du n^{ième} étage (V_{A})ₙ dans la solution absorbante du n^{ième} étage (J_{A})ₙ libérant la chaleur d'absorption du n^{ième} étage,
(2) transmission de la chaleur d'absorption du n^{ième} étage dégagée dans la sous-zone PEA-n par l'intermédiaire des moyens de transfert de chaleur du n^{ième} étage au liquide contenant le solvant dans la sous-zone PEB-n,
(3) génération de la seconde vapeur du n^{ième} étage dans la sous-zone PEB-n,
(4) courant de la deuxième vapeur du n^{ième} étage (V_{B})ₙ allant de la zone PE-n à la zone PE-(n+1) pour devenir la première vapeur du (n+1)^{ième} étage (V_{A})ₙ₊₁, d'où la deuxième vapeur générée du dernier étage devient ainsi la vapeur de produit.

21. Appareil selon la revendication 20, dans lequel un groupe de parois sensiblement verticales sépare la sous-zone d'absorption de la première vapeur du n^{ième} étage (sous-zone PEA-n), de la sous-zone de génération de la deuxième vapeur du n^{ième} étage (sous-zone PEB-n), un côté des parois servant de la première interface procurant des moyens pour former un film liquide de la solution absorbante (J_{A})ₙ dans la sous-zone PEA-n, l'autre côté des parois servant de la deuxième interface procurant des moyens pour former un film liquide du liquide contenant le solvant (L_{B})ₙ dans la sous-zone PEB-n, et les parois servant de moyens de transfert de chaleur entre les sous-zones PEA-n et PEB-n.

22. Appareil selon la revendication 21, dans lequel le groupe de parois verticales dans la zone PEₙ divise les zones et forme un premier groupe de compartiments, dénotés respectivement et séquentiellement en tant que compartiments (A1)ₙ, (A2)ₙ, ..., (An)ₙ, ..., (A_{N})ₙ et un deuxième groupe de compartiments, dénotés respectivement et séquentiellement compartiments (B1)ₙ, (B2)ₙ, ..., (Bn)ₙ, ..., (B_{N})ₙ, les deux groupes de compartiments étant respectivement dans les sous-zones PEA-n et PEB-n et formant un réseau alterné de compartiments.

23. Appareil selon la revendication 20, qui comprend un premier serpentin de transfert de chaleur du n^{ième} étage dans la sous-zone PEA-n, un deuxième serpentin de transfert de chaleur du n^{ième} étage dans la sous-zone PEB-n, les deux serpentins étant raccordés pour former une boucle, un moyen de pompage pour faire circuler un milieu d'échange de chaleur à travers la boucle de serpentins, la surface extérieure du premier serpentin servant de moyen procurant une première interface, la surface extérieure du deuxième serpentin servant de moyen procurant une deuxième interface, et les parois des serpentins et le milieu d'échange thermique en circulation servant ensemble de moyens de transfert de chaleur.

24. Appareil selon la revendication 20, qui comprend en outre une zone de fusion du solide solvant dans laquelle la deuxième vapeur du dernier étage (V_{B})_{N} est amenée en relation d'échange de chaleur avec une masse de solide solvant dérivée de la première masse condensée par MPT (multiple transformation de phases) pour ainsi condenser la vapeur et fondre simultanément le solide solvant.

25. Appareil selon la revendication 24, dans lequel la deuxième vapeur du dernier étage est amenée en contact direct avec le solide solvant.

26. Appareil selon la revendication 24, dans lequel le nombre de zones d'augmentation de pression est égal à 1.

27. Appareil selon la revendication 24, dans lequel le nombre de zones d'augmentation de pression est supérieur à 1.

28. Appareil pour séparer un mélange d'alimentation qui contient un composant principal qui est à la fois volatil et cristallisable par une opération de lyophilisation, qui comprend :
(A) une première zone de traitement principale maintenue sous une pression (PA)₁ qui est inférieure à la pression de sublimation du mélange à l'état de phase solide, dans laquelle le mélange d'alimentation en phase solide est soumis à une opération de sublimation pour former ainsi une vapeur initiale ;
(B) une deuxième zone de traitement principale pour soumettre la vapeur initiale à une opération d'augmentation de la pression de vapeur par absorption en N étages pour produire ainsi une vapeur de produit sous une pression de sortie supérieure (P_{B})_{N}, dans laquelle N est égal ou supérieur à 1, qui comprend :
(1) un récipient qui contient N zones d'augmentation de pression, respectivement dénotées zones PE-1, PE-2, ..., PE-n, ..., PE-N, chaque zone d'augmentation de pression, PE-n, contenant une sous-zone d'absorption d'une première vapeur du n^{ième} étage, dénotée sous-zone PEA-n, et une sous-zone de génération d'une deuxième vapeur du n^{ième} étage, dénotée sous-zone PEB-n, les zones d'augmentation de pression étant disposées en séquence, la sous-zone de génération de la deuxième vapeur, PEB-n, d'un n^{ième} étage étant ainsi raccordée à la sous-zone d'absorption de la première vapeur de l'étage suivant, PEA-(n+1), et la deuxième vapeur générée dans un n^{ième} étage (V_{B})ₙ devenant la première vapeur à absorber à l'étage suivant (V_{A})ₙ₊₁ ;
(2) un passage de première vapeur amenant la première vapeur du n^{ième} étage, (V_{A})ₙ, dans la sous-zone PEA-n ;
(3) un passage de deuxième vapeur retirant la deuxième vapeur du n^{ième} étage, (V_{B})ₙ, de la sous-zone PEB-n ;
(4) des moyens procurant une première interface pour procurer une surface d'interaction liquide-vapeur importante dans PEA-n pour l'absorption de la première vapeur dans une solution d'absorption du n^{ième} étage, (J_{A})ₙ ;
(5) des moyens procurant une deuxième interface pour procurer une surface d'interaction liquide-vapeur importante dans PEB-n pour vaporiser une masse liquide contenant le solvant ;
(6) des moyens de transfert de chaleur pour transférer la chaleur d'absorption de la sous-zone PEA-n à la sous-zone PEB-n ;
l'appareil, lors de :
(1) l'introduction de la vapeur d'alimentation dans la sous-zone PEA-1,
(2) l'introduction d'une solution absorbante (J_{A})ₙ dans la sous-zone PEA-n, et
(3) l'introduction d'un liquide contenant le solvant dans la sous-zone PEB-n,
causant les transformations suivantes :
(1) absorption de la première vapeur du n^{ième} étage (V_{A})ₙ dans la solution absorbante du n^{ième} étage (J_{A})ₙ libérant la chaleur d'absorption du n^{ième} étage,
(2) transmission de la chaleur d'absorption du n^{ième} étage dégagée dans la sous-zone PEA-n par l'intermédiaire des moyens de transfert de chaleur du n^{ième} étage au liquide contenant le solvant dans la sous-zone PEB-n,
(3) génération de la deuxième vapeur du n^{ième} étage dans la sous-zone PEB-n,
(4) courant de la deuxième vapeur du n^{ième} étage (V_{B})ₙ de la zone PE-n à la zone PE-(n+1) pour devenir la première vapeur du (n+1)^{ième} étage (V_{A})ₙ₊₁, la deuxième vapeur générée du dernier étage devenant ainsi la vapeur de produit.

29. Appareil selon la revendication 28, qui comprend en outre une zone de rejet de chaleur dans laquelle la deuxième vapeur du dernier étage (V_{B})_{N} est condensée en rejetant la chaleur dans unmilieu d'échange de chaleur extérieur.

30. Appareil selon la revendication 28, qui comprend en outre une zone de rejet de chaleur dans laquelle la deuxième vapeur du dernier étage (V_{B})_{N} est absorbée dans une autre solution absorbante et la chaleur d'absorption est enlevée par un moyen d'échange de chaleur extérieur.

31. Appareil selon la revendication 28, dans lequel le nombre de zones d'augmentation de pression est égal à un.

32. Appareil selon la revendication 28, dans lequel le nombre de zones d'augmentation de pression est supérieur à un.

33. Procédé pour soumettre un mélange d'alimentation qui est au moins en partie à l'état liquide et qui contient un solvant volatil pour une opération de multiples transformations de phases solide-liquide-vapeur qui comprend :
(1) une première étape dans laquelle on introduit un mélange d'alimentation dans une première zone (zone 1) qui est maintenue sous une première pression qui est inférieure à la pression de vapeur du mélange à sa température de congélation pour, simultanément, vaporiser le solvant et le cristalliser et former ainsi une première vapeur V₁₂ et une première masse condensée K₁₈ qui contient une masse de solvant solide S₁₈ ;
(2) une deuxième étape dans laquelle on absorbe la première vapeur V₁₂ dans une solution absorbante J₆₂ contenant le solvant et un soluté dans une plage de concentration dans une deuxième zone (zone 2) de telle sorte que, tandis que l'absorption s'effectue à une pression qui est voisine de la pression régnant dans la première étape, ou quelque peu inférieure à cette pression, la température d'absorption étant quelque peu supérieure à la température de fusion du solvant solide ;
(3) une troisième étape dans laquelle on fond une masse du solvant solide qui est dérivée de la première masse condensée dans une quatrième zone (zone 4) ;
(4) une quatrième étape dans laquelle on établit une interaction de chaleur entre la deuxième zone et la quatrième zone de telle sorte qu'au moins une partie principale de la chaleur dégagée dans la deuxième étape est utilisée pour fournir la chaleur nécessaire dans la troisième étape.

34. Procédé selon la revendication 33, dans lequel la température d'absorption dans la deuxième étape est supérieure de moins de 10°Centrigrades à la température de fusion du solvant solide dans la troisième étape.

35. Procédé selon la revendication 33, dans lequel la température d'absorption dans la deuxième étape est supérieure de moins de 5°Centrigrades à la température de fusion du solvant solide dans la troisième étape.

36. Procédé selon l'une des revendications 33, 34 ou 35, qui comprend en outre :
(5) une cinquième étape, dans laquelle on génère une deuxième vapeur à partir d'une masse de solvant solide dans une troisième zone, la troisième zone étant séparée de la zone 2 par une ou plusieurs parois de séparation conductrices de la chaleur, de telle sorte que la chaleur dégagée dans la deuxième étape est transmise à travers la paroi pour fournir la chaleur nécessaire dans la cinquième étape, et le procédé est en outre caractérisé en ce qu'on établit une interaction de chaleur entre la deuxième vapeur générée et le solvant solide dans la zone 4, de telle sorte que la chaleur nécessaire dans la troisième étape est fournie par la condensation de la deuxième vapeur.

37. Procédé selon la revendication 36, dans lequel l'interaction thermique entre la deuxième vapeur et le solvant solide est effectuée en amenant la deuxième vapeur en contact avec le solvant solide.

38. Procédé selon l'une des revendications 33, 34 ou 35, qui est en outre caractérisé en ce que la deuxième zone et la quatrième zone sont séparées par une paroi conductrice de la chaleur, de telle sorte que la chaleur dégagée dans la deuxième étape est transmise à travers la paroi de séparation pour fournir la chaleur nécessaire à la troisième étape.

39. Procédé selon la revendication 38, dans lequel la zone 4 est confinée à l'intérieur d'un ou de plusieurs conduits et la paroi des conduits est la paroi de séparation entre la zone 2 et la zone 4.

40. Appareil pour soumettre un mélange d'alimentation contenant un solvant volatil et cristallisable à une opération de multiples transformations de phases solide-liquide-vapeur, qui comprend :
(1) un récipient qui contient trois zones de traitement, respectivement dénotées zone 1, zone 2 et zone 4, et une zone intermédiaire séparant la zone 2 et la zone 4, dénotée zone 24 ;
(2) un passage de première vapeur entre la zone 1 et la zone 2 ;
(3) une barrière vis-à-vis d'un courant de première vapeur empêchant un courant de vapeur entre la zone 2 et la zone 4 ;
(4) des moyens procurant une première interface pour procurer une surface d'interaction liquide-vapeur importante dans la zone 1 ;
(5) des moyens procurant une deuxième interface pour procurer une surface d'interaction liquide-vapeur importante dans la zone intermédiaire, zone 24 ;
(6) des premiers moyens de transfert de chaleur pour transférer la chaleur de la zone 2 à la zone 4 ;
l'appareil, lors de :
(1) la mise sous vide du récipient,
(2) l'introduction d'un mélange d'alimentation L₀₁ dans la zone 1,
(3) l'introduction d'une solution absorbante J₆₂ dans la zone 2,
(4) l'introduction d'une masse de solvant solide dans la zone 4,
causant les transformations suivantes :
(1) le mélange d'alimentation dans la zone 1 subit une vaporisation et une solidification simultanées pour former une première vapeur V₁₂ et un mélange solide-liquide K₁₈ contenant une masse de solvant solide S₁₈,
(2) la première vapeur V₁₂ pénètre dans la zone 2 et est absorbée dans la solution absorbante J₆₂ pour former une solution absorbante diluée J₂₆,
(3) la chaleur dégagée dans l'opération d'absorption dans la zone 2 est transmise par les premiers moyens de transfert de chaleur dans la zone 4,
(4) le solvant solide S₆₂ dans le mélange solide-liquide K₆₂ subit une opération de fusion en recevant de la chaleur des premiers moyens de transfert de chaleur.

41. Appareil selon la revendication 40, dans laquelle la barrière vis-à-vis d'un courant de la première vapeur et les premiers moyens de transfert de chaleur sont tous deux un groupe de parois conductrices de chaleur d'un premier groupe de conduits de fluide, et la zone 4 est à l'intérieur du premier groupe de conduits de fluide, et les moyens procurant la deuxième interface pour former un film liquide d'une solution absorbante se trouve sur les surfaces extérieures du premier groupe de conduits de fluide.

42. Appareil selon la revendication 40 ou la revendication 41, dans lequel les moyens procurant la première interface sont des surfaces verticales ou quasi-verticales en rotation.

43. Appareil selon la revendication 40, qui comprend en outre :
(7) une troisième zone de traitement dénotée zone 3 dans la zone intermédiaire,
(8) des moyens procurant une deuxième interface pour procurer une surface d'interaction liquide-vapeur substantielle dans la zone 2,
(9) des moyens procurant une troisième interface pour procurer une surface d'interaction liquide-vapeur substantielle dans la zone 3,
dans lequel à la fois la barrière vis-à-vis d'un courant de première vapeur et les premiers moyens de chaleur thermique sont un groupe de parois verticales conductrices de la chaleur, les moyens procurant la deuxième interface sont procurés en formant un film liquide sur un premier côté du groupe de parois verticales et les moyens procurant la troisième interface sont procurés en formant un film liquide sur l'autre côté du groupe de parois verticales,
l'appareil, lors de :
(1) la mise sous vide du récipient,
(2) l'introduction de la solution absorbante dans la zone 2,
(3) l'introduction d'une masse de solvant liquide dans la zone 3, et
(4) l'introduction d'une masse de solvant solide dans la zone 4,
causant les transformations suivantes :
(1) le mélange d'alimentation dans la zone 1 subit à la fois une vaporisation et une solidification pour former une première vapeur V₁₂ et un mélange solide-liquide K₁₈ contenant une masse de solvant solide S₁₈,
(2) la première vapeur V₁₂ pénètre dans la zone 2 et est absorbée dans la solution absorbante J₆₂ pour former une solution absorbante diluée J₂₆,
(3) la chaleur dégagée dans l'opération d'absorption dans la zone 2 est transmise par la paroi conductrice de la chaleur dans la zone 3,
(4) la masse de solvant liquide L₄₃ est vaporisée pour former une seconde vapeur V₃₄ dans la zone 3,
(5) l'échange de chaleur de la deuxième vapeur avec le solvant solide dans la zone 4 pour subir ainsi une condensation simultanée de la deuxième vapeur et la fusion du solvant solide pour former ainsi une masse de solvant liquide L₄.

44. Appareil selon la revendication 43, qui comprend en outre un passage de vapeur entre la zone 3 et la zone 4, de telle sorte que la deuxième vapeur générée dans la zone 3 peut être amenée en contact direct avec le solvant solide dans la zone 4 pour accomplir simultanément la condensation de la deuxième vapeur et la fusion du solvant solide.

45. Appareil selon la revendication 43, qui comprend un premier groupe de compartiments dans la zone 2, respectivement et séquentiellement dénotés A₁, A₂, **...,** A_{N-1} et A_{N}, et un deuxième groupe de compartiments dans la zone 3, respectivement et séquentiellement dénotés B₁, B₂ ..., B_{N-1} et B_{N}, les deux groupes de compartiments formant un réseau alterné de compartiments, une paroi conductrice de la chaleur séparant un compartiment dans le premier groupe de deux compartiments adjacents du deuxième groupe.
